(19) Europäisches Patentamt
European Patent Office
Office européen des brevets

(11) Numéro de publication : **0 445 694 B1**

(12) # FASCICULE DE BREVET EUROPEEN

(45) Date de publication du fascicule du brevet : **04.10.95 Bulletin 95/40**

(51) Int. Cl.[6] : **H01Q 21/00,** H01Q 3/26, G01S 7/03

(21) Numéro de dépôt : **91103215.9**

(22) Date de dépôt : **04.03.91**

(54) **Système d'antenne imprimée active à haut rendement pour radar spatial agile.**

(30) Priorité : **09.03.90 FR 9003027**

(43) Date de publication de la demande : **11.09.91 Bulletin 91/37**

(45) Mention de la délivrance du brevet : **04.10.95 Bulletin 95/40**

(84) Etats contractants désignés : **DE ES FR GB IT SE**

(56) Documents cités :
**EP-A- 0 200 819**
**EP-A- 0 325 701**
**ONDE ELECTRIQUE. vol. 69, no. 2, mars 1989, Paris,FR;pages 7 - 14; POURAILLY et GUERIN: "Avenir des antennes-réseaux actives-Active array antennas in the future"**
**MICROWAVE JOURNAL. vol. 31, no. 3, mars 1988, Dedham,US;pages 113 - 125; McLLVENNA: "Monolithic Phased Arrays for EHF Communications Terminals"**

(73) Titulaire : **ALCATEL ESPACE**
**11, avenue Dubonnet**
**F-92407 Courbevoie Cédex (FR)**

(72) Inventeur : **Caille, Gérard**
**7,rue de Vérasque**
**F-31170 Tournefeuille (FR)**
Inventeur : **Cazaux, Jean-Louis**
**3, rue Renaudot**
**F-31100 Toulouse (FR)**
Inventeur : **Remondiere, Olivier**
**25bis, Chemin de Montbel**
**F-31270 Frouzins (FR)**

(74) Mandataire : **Weinmiller, Jürgen et al**
**Lennéstrasse 9**
**Postfach 24**
**D-82336 Feldafing (DE)**

EP 0 445 694 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

L'invention concerne un système d'antenne imprimée active à haut rendement pour radar spatial agile.

Un satellite radar d'observation fonctionnant sur le principe de la visée latérale et synthèse d'ouverture (SAR ou "Synthetic Aperture Radar"), c'est-à-dire un Radar à Synthèse d'Ouverture qui permet le traitement des échos utilisant l'effet Doppler pour obtenir une résolution d'image très fine malgré l'éloignement radar-zône observée, nécessite une antenne de très grandes dimensions, avec agilité électronique bi-dimensionnelle, émettant et recevant successivement en deux polarisations linéaires orthogonales.

Une mission typique en bande X nécessite plus de 6000 commandes de phase sur une antenne de 2 m x 8 m.

Un système à amplification centralisée aurait des pertes prohibitives et une fiabilité réduite. Un article paru dans L'Onde Electrique du mars/avril 1989, v.69 (no.2), pp. 7 à 14, par J.L. POURAILLY et Claude GUERIN, intitulé "Avenir des antenne-réseaux actives" décrit des antennes radar actives à haut rendement pour radar aeroporté d'une géneration future, fonctionnant en régime pulsé et comportant des milliers de modules microélectroniques E/R réalisés en technologie MMIC distribués sur l'antenne, chaque module étant relié à un élément rayonnant imprimé. Le domaine d'application du radar décrit dans ce document est celui des radars de surveillance et de conduite de tir, pouvant détecter et/ou localiser multiples cibles simultanément, éventuellement en neutralisant des sources localisées de brouillage intentionnel ou non.

Les antennes pour radars spatiaux de type SAR ayant déjà été réalisées utilisent deux types d'éléments rayonnants, ainsi :

- L'antenne du satellite ERS1 de l'Agence Spatiale Européenne est composées de guides à fentes bande C fonctionnant en une seule polarisation V ("pseudoverticale" perpendiculaire à la normale à l'antenne), comme décrit dant l'article "The planar array antennas for ERS1" des "Proceedings of IGARSS 1988". Mais son faisceau est fixe, sans balayage électronique.
- Les antennes des satellites américains Seasat, SIRA et B sont composées de "patches", c'est-à-dire de pavés conducteurs gravés sur du nid d'abeille, résonnant en bande L en une seule polarisation H (horizontale, perpendiculaire à la normale à l'antenne), comme décrit dans l'article "Seasat and SIRA microstrip antennas" des "Proceedings of Workshop on Printed Antennas Technology" : Las Cruces - 1979". Mais leur faisceau est fixe.
- le radar de type SAR prévu sur la navette américaine "SIR.C" (Shuttle Imerging Radar), qui doit voler en 1991 ou 1992 comme décrit dans "Heading for space C. Band phased array" dans "Microwave and RF " d'avril 1986, comporte :
  . une antenne passive en bande X à base de guides à fentes monopolarisées
  . deux antennes actives bipolarisées en bandes L et C.

Il n'y a donc pas d'antenne active en bande X, et encore moins d'antenne bipolarisée.

Les antennes actives en bandes L et C de l'art connu ne balaient électroniquement que dans un plan (élévation).

De plus les spécifications de masse, contrôle thermique et fiabilité, sont moins sévères sur la navette américaine ; par exemple les amplificateurs émission sont prévus en technologie "hybride" et non "monolytique". Cette première technologie est nettement plus lourde.

Les radars spatiaux de type SAR étudiés en France notamment pour l'observation des ressources terrestres (végétation, hydrologie, océanographie) doivent pouvoir observer en bande X (entre 9,5 et 9,8 GHz) dans les deux polarisations horizontale et verticale.

Les dimensions de surface rayonnante nécessaire (hauteur 2 à 3 m x longueur 7 à 10 m) ne permettent pas la juxtaposition sur un satellite de plusieurs antennes différentes, une par polarisation ou une pour l'émission et l'autre pour la réception.

Le radar fonctionne "en pulsé", intercalant dans son chronogramme l'émission d'une impulsion en polarisation horizontale ou H, la réception des échos d'une impulsion H précédente, l'émission d'une impulsion en polarisation verticale ou V, la réception des échos d'une impulsion V précédente, selon l'exemple de la figure 1.

L'utilisation d'une seule antenne à balayage électronique deux plans dont l'ensemble de la surface est active pour chacun des quatre modes précédents, est possible grâce à un double système de commutation :

- les éléments rayonnants imprimés (ERI) rayonnent (ou reçoivent) un champ électrique polarisé soit horizontalement (H), soit verticalement (V), suivant que l'on commute l'accès à l'une des deux lignes microstrips excitant les "patches".
- la commutation entre les amplificateurs émission (forte puissance) et réception (faible bruit) permet d'utiliser les mêmes déphaseurs commandables qui assurent le balayage et la formation du faisceau d'antenne.

Si l'on utilise, comme dans la plupart des radars SAR précédemment cités, une amplification centralisée, les pertes dans les circuits de répartition depuis la plate-forme jusqu'aux éléments rayonnants, dans les déphaseurs et dans le double système de commutation, sont prohibitives :

- elles détériorent le facteur de bruit en réception ;
- en émission, il faut rayonner, pendant les impulsions, 3 à 6 kW, suivant les missions : les pertes ci-dessus obligent à doubler approximativement la puissance disponible à la sortie du TOP (tube à onde progressive). Un tel TOP spatial de 6 à 12 kW, pulsé en bande X, n'existe pas actuellement ; même s'il était développé, sa fiabilité serait réduite.

L'invention propose, à cet effet, un système d'antenne imprimée active à haut rendement pour radar spatial agile fonctionnant en régime pulsé et en balayage électronique deux plans, ledit système comprennant plusieurs milliers de modules E/R microélectroniques en technologie MMIC distribués sur l'antenne, chacun étant relié à un élément rayonnant imprimé, **caractérisé en ce que** ledit système est agile de faisceau et de polarisation, chaque élément rayonnant imprimé comportant plusieurs "patches" carrés bipolarisés reliés par des lignes "microstrip" qui les excitent de manière équi-amplitude et équiphase en deux accès perpendiculaires ; la commutation à l'un ou a l'autre de ces deux accès assurant l'émission ou la réception en polarisation horizontale ou verticale ; et le chronogramme dudit système intercalant l'émission d'une implusion en polarisation horizontale (H), la réception des échos d'une impulsion en polarisation horizontale (H) précédente, l'émission d'une implusion en polarisation verticale (V), la réception des échos d'une impulsion en polarisation verticale précédente.

L'utilisation de circuits de type MMIC tous identiques permet de maximiser leur rendement, de minimiser leur puissance crête et de rendre leur fabrication en grande série à un coût modéré.

Avantageusement l'invention concerne un système d'antenne à balayage bidimensionnel (élévation + azimut).

Avantageusement on utilise des matériaux très légers et suffisamment rigides : en y ajoutant un système de liaison à découplage thermoélastique entre structures mécaniques primaires et secondaires ce qui permet de limiter les déformations à moins de 2 millimètres pour une antenne de plus de 8 mètres par 2 mètres.

Avantageusement un contrôle thermique est assuré en réalisant une super-isolation à l'arrière et sur les tranches, et en utilisant un radôme blanc assurant les échanges radiatifs à l'avant, ce qui permet de maintenir une température homogène sur l'antenne et variant très peu au cours de l'orbite du satellite.

Avantageusement un contrôle des déformations de l'antenne est réalisé par visée laser et celles-ci sont compensées par la commande des déphaseurs, répartis en très grand nombre sur l'antenne.

Selon l'invention on répartit l'amplification dans des "modules actifs émission-réception" (MAER en anglais "T.R. module"), ensemble de puces MMIC reliées sur un substrat d'alumine, assurant le déphasage, l'amplification et les commutations, en émission et en réception, réalisé dans les dimensions réduites et avec une masse très faible en technologie MMIC (Monolithic Microwave Integrated Circuits), et connectés juste derrière les éléments rayonnants.

Les pertes des répartiteurs et des déphaseurs jouent très peu dans le bilan de liaison du radar car elles interviennent avant l'amplification finale en émission, et après l'amplification initiale faible bruit en réception.

Seules jouent à plein :

- les pertes dans les éléments ERI, qui sont faibles car les trajets du signal hyperfréquence dans le plan rayonnant sont inférieurs à 8 cm ;
- les pertes du commutateur DPDT (double entrée/double sortie) qui assure le double système de commutation en n'ayant qu'un seul transistor FET (transistor à effet de champ, en technologie MMIC) disposé en shunt sur chaque trajet, donc en ayant des pertes inférieures à celles de deux commutateurs SPDT (simple entrée/double sortie) en série.

Les amplificateurs émission (HPA ou "high power amplifier") réalisés en fonderie commerciale MMIC sur arséniure de gallium à un coût modéré en série délivrent difficilement en bande X une puissance de sortie supérieure à 1W. Cet ordre de grandeur est compatible avec la puissance totale que l'antenne doit rayonner, à condition que les amplificateurs de tous les modules MAER sortent la même puissance.

Si cette puissance totale variait en fonction du temps et de la position sur l'antenne, les amplificateurs les plus sollicités devraient sortir beaucoup plus, ce qui rendrait leur fabrication en série très critique. De plus les amplificateurs délivrant une puissance inférieure auraient un rendement ($P_{out}$ -$P_{in}$/$P_{DC}$) inférieur, donc la consommation de l'antenne serait plus élevée ; or il s'agit d'un des paramètres les plus critiques de ce type de satellite.

On utilise donc un procédé de synthèse des diagrammes qui permet de faire balayer au lobe d'antenne la zone utile d'observation en gardant une empreinte au sol constante (donc un lobe de largeur variable) :

- avec une illumination uniforme en émission ;
- en préréglant seulement un atténuateur situé derrière l'amplificateur réception LNA (Low Noise Amplifier) sur quatre niveaux (dynamique 2,8 dB) suivant la place du module sur l'antenne ;
- en commandant en vol les seuls déphaseurs sur quatre bits.

Le choix d'une solution à amplificateurs équipuissance et répartis régulièrement facilite grandement le contrôle thermique, qui est un autre point critique de ce type d'antenne. En effet, la dissipation est uniforme sur l'antenne (l'énergie dissipée dans les atténuateurs en réception est négligeable, vu le niveau de signal et de bruit reçu sur l'antenne). Cela ne serait pas le cas :

- ni dans une solution où l'on fait varier le gain de la chaîne émission sur l'antenne ;
- ni dans une solution où on répartit de façon inégale sur l'antenne des amplificateurs équipuissance ; on réalise alors la loi d'amplitude (indispensable pour obtenir un diagramme à bas niveau de lobes secondaires) en reliant un module actif à plus ou moins de patches, suivant la zône d'antenne.

Enfin la présence de déphaseurs répartis sur toute l'antenne permet de corriger au besoin en vol les déformations de l'antenne après avoir mesuré celle-ci par une visée optique ou en relevant le temps de propagation du signal hyperfréquences jusqu'à une sonde située à l'avant de l'antenne.

Le système de l'invention permet de rayonner 4 à 6 kW crête avec moins d'1W par amplificateur ; il assure un très bon facteur de bruit à la réception. La fiabilité est excellente par redondance naturelle ; un découpage modulaire en sous-panneaux facilite la fabrication, l'assemblage, les tests et les éventuels dépannages au sol.

La synthèse de diagrammes de direction et de forme variable est réalisée grâce aux déphaseurs commandables et à des atténuateurs préréglés en réception. L'utilisation de modules actifs identiques, dont tous les amplificateurs fonctionnent à la même puissance en émission permet d'abaisser le coût et la consommation en minimisant la puissance individuelle et en maximisant le rendement.

Les caractéristiques et avantages de l'invention ressortiront d'ailleurs de la description qui va suivre, à titre d'exemple non limitatif, en référence aux figures annexées sur lesquelles :

- les figures 1 et 2 illustrent le fonctionnement d'un radar SAR ;
- la figure 3 représente le schéma général du système d'antenne selon l'invention ;
- les figures 4 à 13 illustrent différentes parties de ce système d'antenne ;
- les figures 14 à 22 représentent des diagrammes émission ou/et réception (dans leur partie A) illustrant le fonctionnement du système d'antenne selon l'invention, ainsi que les courbes d'excitation des sources correspondantes (dans leur partie B) ;
- la figure 23 représente une variante d'un module actif du système d'antenne selon l'invention.

La figure 1 donne un exemple de chronogramme du fonctionnement d'un radar de type SAR.

- avec une partie émission 10 qui comprend :
  . un pulse H 11 de 40 à 50 μs correspondant à l'émission 12 de la polarisation horizontale H
  . un pulse V 13 de 40 à 50 μs correspondant à l'émission 14 de la polarisation verticale V avec une période de répétition

$$Tr = \frac{1}{PRF\ (\simeq 2hz)} \simeq 500\ \mu s$$

- avec une partie réception 15 qui comprend
  . un écho 16 du nadir du yième pulse précédent
  . un écho utile H 17 du xième pulse précédent (étalé le long des 20 kilomètres de fauchée utile) de 55 μs (incidence minimale) à 170 μs (incidence maximale)
  . un autre écho 18 du nadir
  . un écho utile V 19 du xième pulse précédent.

La figure 2 est une représentation en élévation schématique du balayage électronique d'un radar SAR d'observation.

Le satellite 20 est sur une orbite 21 à une distance d par exemple 680 kilomètres, de la terre 22, le point N étant le NADIR (direction du centre de la terre).

On a un balayage total en élévation par exemple de 78°1 : δM = 54°1 d'un côté, et δM' = 24° de l'autre côté de la direction satellite-nadir. La fauchée 23 est d'environ 20 kilomètres.

La figure 3 montre le schéma général de l'antenne imprimée active selon l'invention.

Les dimensions exactes s'appliquent à une mission particulière en bande X (largeur de bande du signal radar 100 MHz autour de 9,65 GHz) prévoyant un balayage électronique quasi-continu allant jusqu'à 45° de l'axe d'antenne dans le plan d'élévation (plan vertical passant par la normale à l'antenne), puis ± 1°15 de part et d'autre de cet axe de visée dans le plan perpendiculaire au plan d'élévation.

Le niveau des lobes secondaires est spécifié à -18 dB ; compte tenu que les erreurs d'amplitude, de phase et les déformations contribuent à remonter certains lobes secondaires, l'objectif pour les diagrammes théoriques sans erreur est autour de -20 dB.

Ces spécifications conduisent à une antenne 30 de hauteur 31 égale à 2,28 m et longueur 32 égale à 8,16 m comprenant 128 lignes 33 de 51 éléments rayonnants bipolarisés 34 reliés chacun à un module actif 35 ; les ensembles éléments rayonnants 34 + modules actifs 35 sont répartis régulièrement sur l'antenne, chacun occupant une surface de 1,88 cm x 16 cm.

L'invention est détaillée dans ce cas particulier pour ce qui concerne les nombres et dimensions ; mais les principes peuvent s'appliquer à des missions différentes.

Pour répartir l'amplification de puissance et améliorer le facteur de bruit en réception les modules microélectroniques MAER 35 en technologie MMIC (ou "Monolithic Microwave Integrated Circuit"), qui sont des circuits intégrés hyperfréquences transposant les techniques "circuits intégrés logiques en silicium" à l'arséniure de gallium, sont distribués sur l'antenne. Ils permettent la miniaturisation et la production en série à coût modéré, en assurant le déphasage, l'amplification et les commutations (émission/réception et inter-polarisation). Chacun est relié à un élément rayonnant imprimé 34 comportant huit "patches" carrés 36 bipolarisés, reproductibles par photogravure à un coût modéré sur une grande surface.

Ces "patches" carrés 36 bipolarisés sont des pavés conducteurs déposés sur un substrat diélectrique. Ils sont reliés par groupes de huit par des lignes "microstrip" 37 qui les excitent de manière équi-amplitude et équi-phase en deux points perpendiculaires 38 et 39; la commutation à l'un ou l'autre des deux accès assure le rayonnement (ou la réception) en polarisation H ou V, avec un taux de polarisation croisée inférieur à -20 dB sur la couverture.

Chaque module actif 35 comprend des fonctions regroupées sur quatre "puces" :

- la première contient un déphaseur 40 formé d'un déphaseur comprenant 2 bits digitaux 180° et 90° fonctionnant en commutation associé à un déphaseur 0 à 90° commandé par une tension analogique et un commutateur d'entrée 41 ;
- la deuxième contient les différents étages d'un amplificateur HPA 42 ;
- la troisième contient un commutateur de sortie 43 ;
- la quatrième contient les différents étages d'un amplificateur LNA 44 et un atténuateur préréglable 45.

Ces différentes puces sont collées sur un substrat d'alumine et reliées par thermocompression de fils d'or de diamètre 17 μm et de longueur inférieure à 50 μm.

Les "puces logiques" en silicium assurant les interfaces entre les alimentations et commandes d'une part, les fonctions hyperfréquences d'autre part, sont intégrées également dans le même boîtier de dimensions 18 x 40 x 50 mm.

Une interface étudiée spécialement assure la double connexion coaxiale vers l'élément ERI ainsi que la fixation mécanique mutuelle.

Les autres circuits représentés sur la figure 3 sont respectivement

- un commutateur 46 suivi de plusieurs répartiteurs 47 de sous-panneaux ; ce commutateur recevant, lors d'une émission, les pulses radar, et sortant, lors d'une réception, les échos ;
- un calculateur 48 de commande des pointages ;
- un circuit de commande 49 des commutateurs ;
- une arrivée 63 d'alimentation continue.

En effet, comme représenté sur la figure 4, les éléments ERI sont regroupés en sous-panneaux 51 comprenant chacun 3 colonnes 52 desdits éléments et 32 lignes 53 desdits éléments. De plus la longueur 32 de l'antenne 30 est divisée en trois panneaux 54, 55 et 56 repliables. Ainsi à chaque sous-panneau est adossé un répartiteur 47 qui correspond donc à 96 modules actifs.

Le radar présente un fonctionnement alterné en émission et en réception, avec des polarisations horizontales ou verticales.

Ainsi, cela impose la présence, entre les amplificateurs et les émetteur-récepteurs de deux dispositifs successifs de commutation (ou d'isolation pour le premier) :

- un commutateur ou circulateur Emission/Réception,
- un commutateur de polarisation H/V.

L'intérêt de l'antenne active est de rapprocher au maximum les amplificateurs des éléments rayonnants, de limiter les pertes entre les deux, qui nécessitent un gain et une puissance supérieure en émission et augmentent le facteur de bruit en réception.

Aussi ces deux dispositifs font-ils partie des points critiques :

- les circulateurs ne sont pas intégrables en MMIC sous leur forme classique reposant sur les propriétés non réciproques des ferrites ;
- les commutateurs intégrés ont des pertes importantes et sont difficiles à optimiser à la fois du point de vue de la tenue en puissance (émission) et de celui du facteur de bruit (réception).

Trois architectures sont possibles pour réaliser cette fonction de double commutation comme représenté sur les figures 5, 6 et 7 :

- les deux premières solutions, utilisant deux (57, 58) ou quatre (59, 60, 61, 62) commutateurs "une entrée-deux sorties", conduisent à insérer les pertes de deux commutateurs simples, à l'émission et à la réception.
- la troisième solution, qui est originale, utilisant un commutateur 43 "deux entrées-deux sorties" (switch "DPDT" en anglais), introduit des pertes voisines d'un seul commutateur simple pour chaque trajet de fonctionnement.

Dans la réalisation représentée à la figure 8, les pertes sont dûes principalement à l'isolation imparfaite du transistor à effet de champ situé en shunt avec la masse sur le trajet nominal ; les trois transistors à effet de champ situés sur les autres branches sont passants et isolent les deux portes inutilisées. Sur cette figure 8 quatre transistors à effet de champ T1, T2, T3 et T4, montés en shunt avec la masse, servent d'interrupteurs (en état passant ou bloqué suivant la tension appliquée sur la grille). $W_1$ et $W_2$ sont les largeurs des lignes de jonction (sur arséniure de gallium). $Z_1$ et $Z_2$ sont les impédances d'adaptation.

Un tel commutateur est tout à fait adapté à être intégré en technologie monolithique (MMIC).

Le répartiteur 47 est un répartiteur triplaque qui relie les différents modules MAER 35 (module actif émission-réception) par une série de pistes photogravées entre deux couches diélectriques et deux plans de masse. Chaque répartiteur comprend des diviseurs qui sont des coupleurs 3 dB, et une porte chargée qui absorbe une partie des réflexions parasites.

Il y a six répartiteurs triplaques logés à l'arrière de chaque sous-panneau, dont trois servent au fonctionnement nominal (répartition en émission et sommation en réception), trois à la calibration (sommation de signaux prélevés à l'émission par des coupleurs -30 dB situés à la sortie des modules MAER).

L'invention permet le découpage modulaire de l'antenne en sous-panneaux.

Le schéma électrique d'un sous-panneau est représenté en "éclaté" à la figure 9, sur laquelle on peut voir :

- des "patches" 36,
- des éléments ERI 34 ;
- des cables coaxiaux 65 ;
- des modules actifs 35 ;
- les répartiteurs triplaque 47 ;
- les alimentations 66 ;
- des commandes 67.

Les dimensions des sous-panneaux sont de l'ordre de 50 cm x 50 cm pour les raisons suivantes :

- Les substrats diélectriques laminés cuivrés de ces dimensions peuvent être photogravés en un seul morceau, ce qui facilite la réalisation du plan rayonnant et du répartiteur triplaque ;
- un sous-panneau, ne représentant qu'un cinquantième à un centième de l'antenne, a un coût modéré ; il en est fabriqué quelques exemplaires de rechange pour des dépannages de dernière minute en cours d'intégration ;
- un niveau d'amplification intermédiaire (on parlera de modules "primaires") est réalisé à l'entrée arrière d'un sous-panneau, ce qui permet de simplifier la réalisation des modules secondaires en limitant les gains des amplificateurs à 35 dB pour l'amplificateur HPA et 25 dB pour l'amplificateur LNA.

Les mêmes puces réalisées en fonderie MMIC de série pour les modules secondaires (derrière les patches) peuvent être réutilisées pour les modules primaires (derrière les sous-panneaux), à l'exception du déphaseur 40 qui n'est pas nécessaire dans ces derniers, et de l'atténuateur 45 dont la dynamique doit être plus élevée.

Une panne d'un module primaire, entraînant un trou cohérent dans l'illumination de l'antenne, détériore beaucoup plus le diagramme de l'antenne que des pannes de modules secondaires réparties aléatoirement sur l'antenne. Aussi,les modules primaires en petit nombre (68 dans l'exemple choisi) sont-ils redondés ; ce n'est pas nécessaire pour les modules secondaires pour lesquels on peut tolérer jusqu'à 5 à 10% de pannes aléatoires.

Les sous-panneaux sont reliés entre eux par un répartiteur primaire coaxial 70 représenté figures 10 et 11 dans une coupe horizontale et dans une coupe verticale. Celui-ci inclut quatre jeux de lignes à retard 71 commandables, qui évitent un dépointage du faisceau pendant la modulation de fréquence lorsqu'on observe loin de la normale à l'antenne.

La figure 12 donne un schéma électrique de l'antenne représentée à la figure 3.

On retrouve schématiquement :

- un répartiteur primaire 70 ;
- 68 modules actifs primaires 72 (73) qui ne comportent pas de déphaseurs (ces modules sont redondés) ;
- 68 répartiteurs secondaires 47 (74) ;
- 6528 modules secondaires 35 situés (75) juste derrière les "patches" ;
- 6528 éléments ERI 34 (76).

Si on considère la structure mécanique :

- Le choix de matériaux particulièrement légers (mais rigides pour les structures mécaniques ) permet de limiter la masse de l'antenne active, correspondant aux dimensions données précédemment, à 700 kg, ce qui est compatible avec les contraintes spatiales :
  . plans rayonnants et répartiteurs triplaques en verre-téflon-céramique d'épaisseur 0,8 mm, plaqués sur un panneau sandwich "nid d'abeille" aluminium/peaux aluminium ;
  . structure secondaire en sandwich "plaques de fibre de carbone + nid d'abeille aluminium" ;
  . structure primaire en barres de fibre de carbone.
- une bonne planéité est assurée pour chaque panneau grâce à une structure mécanique nervurée 80, comme représenté sur la figure 13 ; cette structure supporte rigidement les sous-panneaux précédemment décrits, mais un système de liaisons souples (du point de vue thermoélastique) entre ces deux structures permet de ne pas répercuter les dilatations de l'une sur l'autre et d'assurer la planéité de l'antenne indispensable à la non détérioration de son diagramme.
- Les sous panneaux sont regroupés en panneaux repliables au lancement et déployables en orbite : trois panneaux repliables 54, 55, 56 pour l'exemple choisi, compatibles avec la plate-forme du satellite et la coiffe d'Ariane 5.
- La liaison hyperfréquences des sous panneaux avec la plate-forme est réalisée par des câbles coaxiaux souples faibles pertes, compatibles avec le déploiement des panneaux.

Sur la figure 13, les différents ensembles électriques d'antenne décrits précédemment ont été représentés schématiquement avec les références 84, 85 et 86.

Pour le contrôle thermique, le refroidissement des modules actifs s'effectue par échanges conductifs et radiatifs à l'intérieur des sous-panneaux, puis radiatifs vers l'avant de l'antenne grâce à un radôme thermique très fin peint en blanc, placé devant le plan rayonnant

Par contre, les tranches et la face arrière de l'antenne sont recouvertes d'une "super-isolation", car leur éclairement est très variable au cours d'une orbite héliosynchrone de type "9h30/21h30" (heures solaires de passage au-dessus de l'équateur), en particulier de part les phénomènes d'ombres portées de la plateforme et des structures.

On parvient ainsi à limiter à moins de 5°C les gradients thermiques sur l'antenne à un moment donné, ce qui est indispensable pour éviter les déformations du diagramme, dûes aux variations de gain et de phase d'insertion des modules actifs en fonction de la température.

Au cours de l'orbite, la température de ces modules MMIC varie entre -10°C (moyennant un réchauffage en fin de périodes de veille) et +14°C, ce qui est très bon pour leur facteur de bruit et leur fiabilité.

Pour éviter que des gradients de température dépassant ceux prévus et provoquant des déformations de l'antenne ne détériorent trop les diagrammes, est prévue une compensation électronique des déformations (imperfections de planéité).

- une visée laser est faite depuis la plateforme jusqu'à de petits miroirs judicieusement répartis sur l'antenne
- un calculateur central corrige la commande des déphaseurs pour corriger les erreurs de phase induites par ces déformations.

Les figures 14 à 22 représentent en leur partie A, successivement des diagrammes émission, réception et émission/réception. Leur partie B illustrant l'excitation des sources correspondantes (N lignes de patches). Elles montrent des diagrammes typiques obtenus à loi d'illumination équi-amplitude en émission, et atténuation préréglée en réception sur quatre niveaux seulement pour les modules secondaires.

Les courbes 80 et 81, représentées sur les parties A de ces différentes figures, sont respectivement un gabarit extérieur et un gabarit intérieur correspondants, qui sont imposés.

Les figures 14 et 15 représentent les diagrammes émission $G_e$ et réception $G_r$ en élévation les plus fins, obtenus par une illumination équi-phase. La figure 16 représente le diagramme équivalent $\sqrt{G_e G_r}$, diagramme commun émission-réception qui assure les mêmes performances pour le radar.

Pour un niveau de lobes secondaires voisin de -20 dB, ce diagramme a un lobe principal plus fin à la base que les meilleurs diagrammes que l'on peut obtenir par une illumination identique en émission et en réception : ceci permet d'avoir, à ouverture utile donnée (0°41 à -0,9 dB sur l'exemple), une antenne légèrement plus courte, et diminue les ambiguités du radar.

L'ajout d'une loi de phase de type parabolique permet de générer des lobes élargis sans avoir à changer les lois d'amplitude. Les figures 17 à 19 donnent exemple d'un lobe de largeur utile 1°69, soit 4,15 fois plus que le lobe fin. Cette modulation de la largeur du lobe permet de maintenir constante la "fauchée" (la largeur de la bande de terrain interceptée par la partie utile du lobe) lorsque l'angle de visée varie par balayage électronique en élévation ; celui-ci est réalisé par l'ajout d'une phase linéaire sur la hauteur de l'antenne.

Les diagrammes en azimut sont toujours les plus fins possibles (figure 20 à 22), ce qui permet de minimiser la longueur d'antenne. Ils sont obtenus avec une atténuation constante par sous-panneau, avec le même pas (0,93 dB) que sur la hauteur de l'antenne.

Ceci permet de réaliser sur la surface de l'antenne une illumination "séparable", produit des lois horizontales et verticales : ces lois restent ainsi constantes sur toute coupe de l'antenne parallèlement à ses axes.

A l'intérieur d'un sous-panneau, on n'a besoin que de quatre niveaux d'atténuation selon la figure 15 ; la dynamique réduite (2,8 dB) évite de distordre la loi de phase lorsqu'on règle les atténuateurs.

Une rotation de 180° dans le plan de l'antenne permet de convertir un sous-panneau de type SP1 en un sous-panneau de type SP4 et un sous-panneau de type SP2 en un sous-panneau de type SP3 :

Le réglage de l'atténuateur du module actif de sous-panneau, en fonction de sa position sur l'antenne, permet le passage d'un sous-panneau SP2 à un sous-panneau SP1 ou d'un sous-panneau SP3 à un sous-panneau SP4 (-3,72 dB), ainsi que la réalisation de la loi d'illumination sur la longueur d'antenne.

Cet atténuateur des modules primaires doit donc être réglable sur 12 niveaux (dynamique 10,2 dB) ; les éventuelles modifications de la phase d'insertion dues à ce réglage sont calibrées et prises en compte par le calculateur de bord, ajoutées aux phases de dépointage et d'élargissement, pour la commande des déphaseurs.

Ce système permet donc d'utiliser des sous-panneaux identiques avec seulement deux types différents de réglage des atténuateurs dans les colonnes verticales de MAER. Seul le réglage du module primaire situé à l'arrière est à réaliser en cas de remplacement d'un sous-panneau.

Le système d'antenne imprimée active à haut rendement a été décrit en détail pour une mission précise en bande X.

Les mêmes principes et la même architecture peuvent s'appliquer à d'autres bandes hyperfréquences ou d'autres spécifications de diagrammes ; seules les dimensions et le nombre de modules actifs varient.

Au lieu de placer un atténuateur à transistor FET passif derrière l'amplificateur LNA 91, on peut remplacer le dernier étage de ce dernier par un transistor FET bi-grille : le réglage de la tension de la deuxième grille permet d'ajuster son gain.

Cette solution diminue les variations de phase d'insertion suivant les degrés d'atténuation et permet une dynamique de gain plus élevée (jusqu'à 20 dB) si nécessaire.

Dans l'état de l'art actuel, la puissance de sortie des amplificateurs HPA 42 réalisés en technologie MMIC ne dépasse pas 1 à 3 W. Si l'on a besoin d'une puissance supérieure, en égard au nombre de modules MAER, peut ajouter un dernier étage 88 SSPA "hybride", c'est-à-dire réalisé sur un substrat différent, avec ses propres circuits d'adaptation.

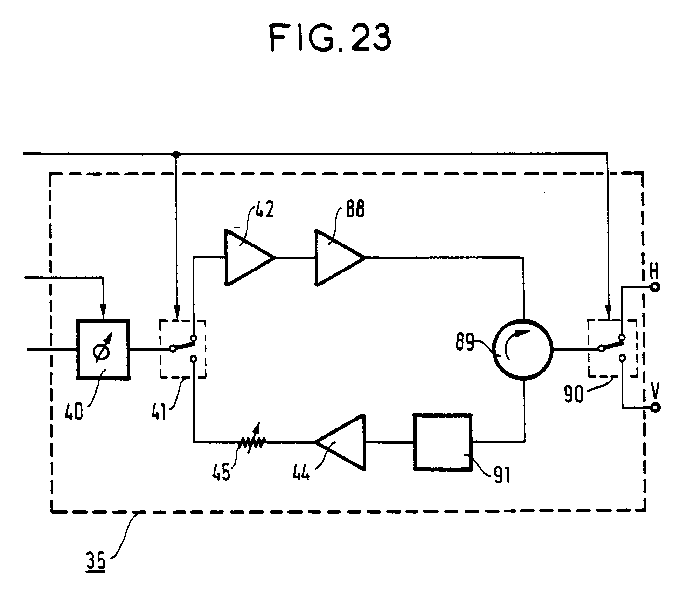

Dans ce cas la réalisation du commutateur DPDT peut poser problème, à cause de la puissance à supporter en émission. On utilisera alors, selon la figure 23, avantageusement un circulateur 89, suivi d'un commutateur 90 SPDT à diodes PIN, l'amplificateur LNA 44 doit alors être protégé par un limiteur 91 de la part d'énergie venant du SSPA, réfléchie sur les éléments rayonnants si ceux-ci ne sont pas parfaitement adaptés.

Le réglage du gain sur la voie réception peut être fait soit par un atténuateur 45, soit par un amplificateur LNA 44 à gain variable, comme décrit précédemment.

Il est bien entendu que la présente invention n'a été décrite et représentée qu'à titre d'exemple préférentiel et que l'on pourra remplacer ses éléments constitutifs par des éléments équivalents sans, pour autant, sortir du cadre de l'invention.

## Revendications

1. Système d'antenne imprimée active à haut rendement pour radar spatial agile fonctionnant en régime pulsé et en balayage électronique deux plans, ledit système comprenant plusieurs milliers de modules E/R microélectroniques (35) en technologie MMIC distribués sur l'antenne, chacun étant relié à un élément rayonnant imprimé (34), **caractérisé en ce que** ledit système est agile de faisceau et de polarisation, chaque élément rayonnant imprimé (34) comportant plusieurs "patches" carrés bipolarisés reliés par des lignes "microstrip" (37) qui les excitent de manière équiamplitude et équi-phase en deux accès perpendiculaires (38,39) et en ce que ledit système comprend des moyens de commutation à l'un ou a l'autre de ces deux accès pour assurer l'émission/réception en polarisation horizontale ou verticale ; le chronogramme dudit système intercalant l'émission d'une implusion en polarisation horizontale (H), la réception des échos d'une impulsion en polarisation horizontale (H) précédente, l'émission d'une impulsion en polarisation verticale (V), la réception des échos d'une impulsion en polarisation verticale précédente.

2. Système d'antenne selon la revendication 1, **caractérisé en ce que** chaque module E/R MMIC (35) émet une puissance inférieur ou égale à 1 Watt.

3. Système d'antenne selon l'une quelconque des revendications 1 ou 2, **caractérisé en ce que** l'antenne est découpée modulairement en sous-panneaux (51) assemblables séparément.

4. Système d'antenne selon la revendication 3, **caractérisé en ce que** les modules E/R MMIC des sous-panneaux (51), et les modules E/R MMIC (35) situés juste derrière les éléments rayonnants (34), sont les mêmes.

5. Système d'antenne selon la revendication 1, **caractérisé en ce que** les moyens de commutation comprennent un commutateur double entrée double sortie (43) pour assurer la double commutation émission/réception et des polarisations horizontale/verticale.

6. Système d'antenne selon la revendication 1, **caractérisé en ce qu'**il comporte en outre des modules actifs de puissance réalisés en technologie hybride qui comportent un circulateur (89) en sortie.

7. Système d'antenne selon la revendication 1, ladite antenne active comprenant une face avant, une face arrière, et une tranche entre de ces deux faces et sur leur pourtour complet, **caractérisé en ce qu'**il comprend une super-isolation à l'arrière et sur la tranche, ainsi qu'un radome blanc à l'avant afin d'assurer les échanges radiatifs à l'avant.

8. Système d'antenne selon la revendication 1, **caractérisé en ce qu'**il comprend une pluralité de déphaseurs de compensation de déformations, répartis sur la surface de ladite antenne en nombre suffisant pour assurer une telle compensation.

## Patentansprüche

1. Aktives Antennensystem in Druckschaltungstechnik mit hohem Wirkungsgrad für ein agiles Satelliten-Radargerät, das im Pulsbetrieb und mit elektronischer Strahlpeilung in zwei Ebenen betrieben wird, wobei das System mehrere tausend mikroelektronische Sende-Empfangsmoduln (35) in MMIC-Technologie besitzt, die über die Antenne verteilt sind und je an ein strahlendes gedrucktes Element (34) angeschlossen sind, dadurch gekennzeichnet, daß das System sowohl hinsichtlich Strahlrichtung als auch Polarisation agil ist und jedes strahlende gedruckte Element (34) mehrere quadratische, in zwei Polarisationen wirksame Flecken enthält, die durch Mikrostreifenleitungen (37) verbunden sind, durch die sie mit gleicher Amplitude und gleicher Phase über zwei zueinander senkrechte Zugänge (38, 39) angeregt werden, und daß das System Schaltmittel zum Anschluß an den einen oder den anderen dieser beiden Zugänge besitzt, um die Aussendung bzw. den Empfang in waagrechter oder senkrechter Polarisation zu gewährleisten, wobei das Zeitdiagramm des Systems die Sendephase eines Impulses in waagrechter Polarisation (H), die Empfangsphase der Echos eines vorhergehenden Impulses in waagrechter Polarisation (H), die Sendephase eines Impulses in senkrechter Polarisation (V) und den Empfang der Echos eines vorhergehenden Impulses in senkrechter Polarisation miteinander verschachtelt.

**2.** Antennensystem nach Anspruch 1, dadurch gekennzeichnet, daß jeder Sende/Empfangsmodul (35) in MMIC-Technologie eine Leistung von höchstens 1 Watt aussendet.

**3.** Antennensystem nach einem beliebigen der Ansprüche 1 oder 2, dadurch gekennzeichnet, daß die Antenne modular in Teilpaneele (51) zerlegt ist, die getrennt zusammengebaut werden können.

**4.** Antennensystem nach Anspruch 3, dadurch gekennzeichnet, daß die Sende/Empfangsmoduln der Teilpaneele (51) und die Sende/Empfangsmoduln (35) in MMIC-Technologie, die direkt hinter den strahlenden Elementen (34) liegen, einander gleichen.

**5.** Antennensystem nach Anspruch 1, dadurch gekennzeichnet, daß die Schaltmittel einen Schalter mit zwei Eingängen und zwei Ausgängen (43) aufweisen, um die doppelte Umschaltung vom Sende- auf Empfangsbetrieb und von der waagrechten zur senkrechten Polarisation zu gewährleisten.

**6.** Antennensystem nach Anspruch 1, dadurch gekennzeichnet, daß es außerdem aktive Leistungsmoduln in Hybridtechnologie enthält, die einen Ausgangszirkulator (89) aufweisen.

**7.** Antennensystem nach Anspruch 1, wobei die aktive Antenne eine Vorderseite, eine Rückseite und eine Schmalseite zwischen diesen Seiten auf dem ganzen Umfang enthält, dadurch gekennzeichnet, daß eine Superisolation auf der Rückseite und der Schmalseite und eine weiße Haube an der Vorderseite vorgesehen ist, um den Strahlungsaustausch nach vorne zu bewirken.

**8.** Antennensystem nach Anspruch 1, dadurch gekennzeichnet, daß es eine Mehrzahl von Phasenschiebern zur Kompensation von Verformungen aufweist, die über die Oberfläche der Antenne in ausreichender Zahl verteilt sind, um eine solche Kompensation sicherzustellen.

## Claims

**1.** High-yield active printed-circuit antenna system for pulsed frequency-hopping space radar electronically scanned in two planes, said system comprising several thousand MMIC transmit/receive modules (35) distributed over the antenna and each connected to a printed-circuit radiating element (34), characterised in that said system is beam agile and polarisation agile, each printed circuit radiating element (34) comprising a plurality of dual polarised square patches connected by microstrip lines (37) adapted to excite them with the same amplitude and the same phase at two perpendicular ports (38, 39), and in that said system comprises means for switching between said two ports to procure transmission or reception with horizontal or vertical polarisation; its timing diagram interleaving the transmission of a horizontal polarisation pulse (H), the reception of echoes from a previous horizontal polarisation pulse (H), the transmission of a vertical polarisation pulse (V) and the reception of echoes from a previous vertical polarisation pulse.

**2.** Antenna system according to claim 1 characterised in that each MMIC transmit/receive module (35) has an output power of 1 W or less.

**3.** Antenna system according to claim 1 or claim 2 characterised in that the antenna is subdivided into modular subarrays (51) adapted to be assembled together.

**4.** Antenna system according to claim 3 characterised in that the same integrated circuits are used in the MMIC transmit/receive modules of the subarray (51) and in the MMIC transmit/receive modules (35) disposed immediately behind the radiating elements (34).

**5.** Antenna system according to claim 1 characterised in that the switching means comprise a double-pole/double-throw switch (43) implementing the transmit/receive and horizontal/vertical polarisation switching functions.

**6.** Antenna system according to claim 1 characterised in that it further comprises active power modules implemented in hybrid technology and which comprise an output circulator (89).

**7.** Antenna system according to claim 1, said active antenna comprising a front, a back and an edge between and all around said front and said back, characterised in that it comprises super-insulation at the rear and at the edge and a white radome adapted to radiate heat towards the front.

**8.** Antenna system according to claim 1 characterised in that it comprises a plurality of phase shifters for compensating deformations distributed over the antenna in sufficient numbers to provide said compensation.

FIG.1

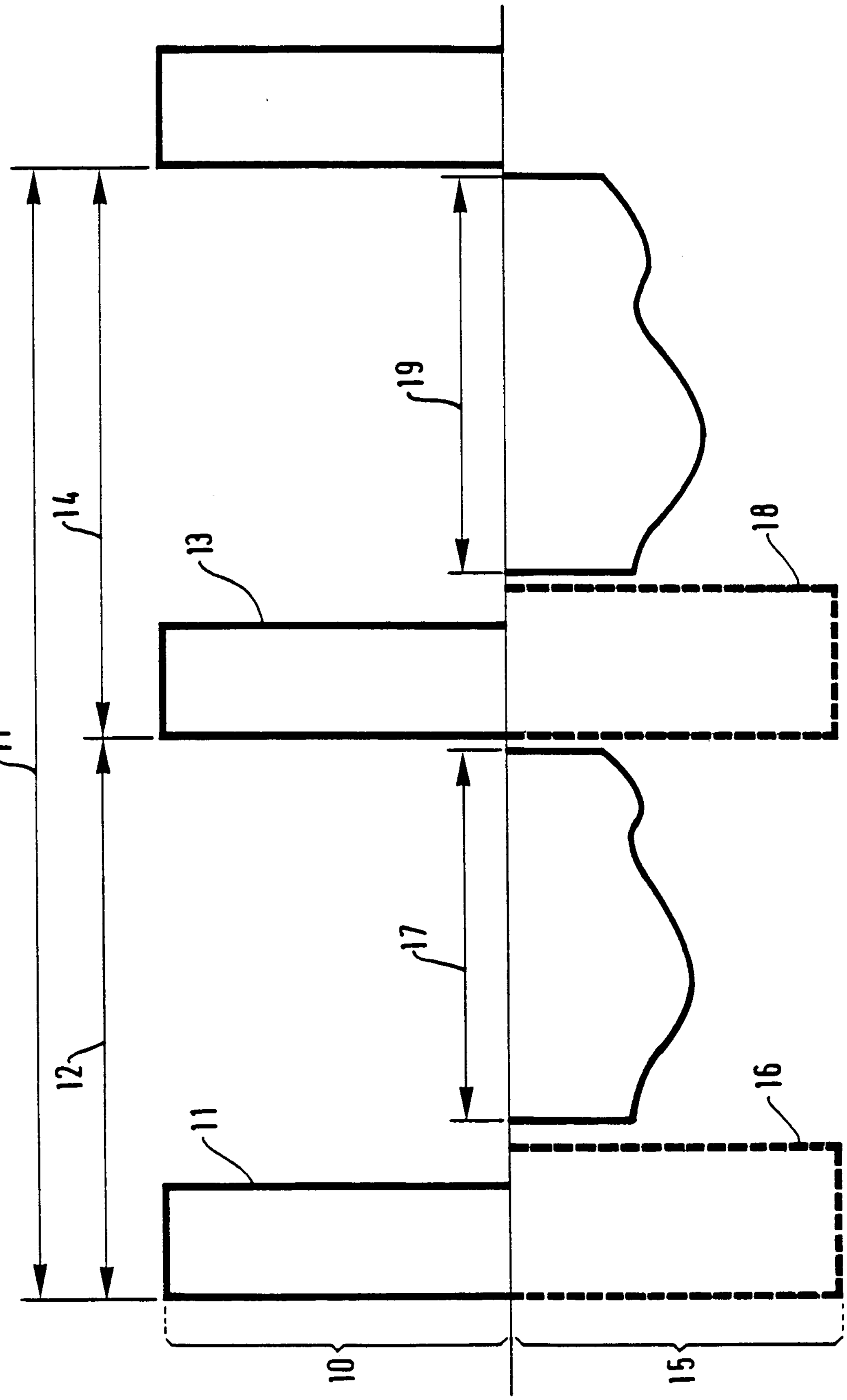

FIG.2

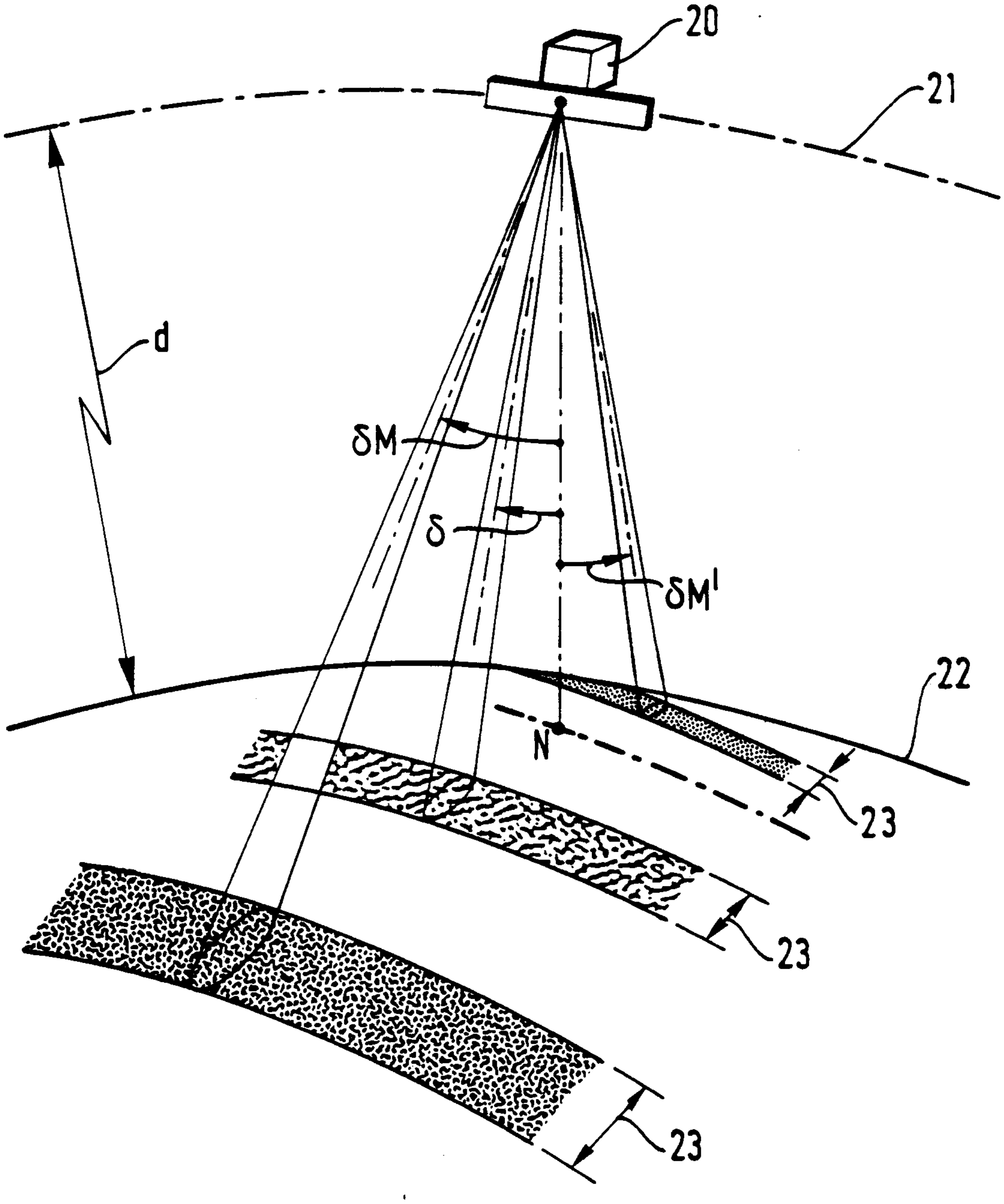

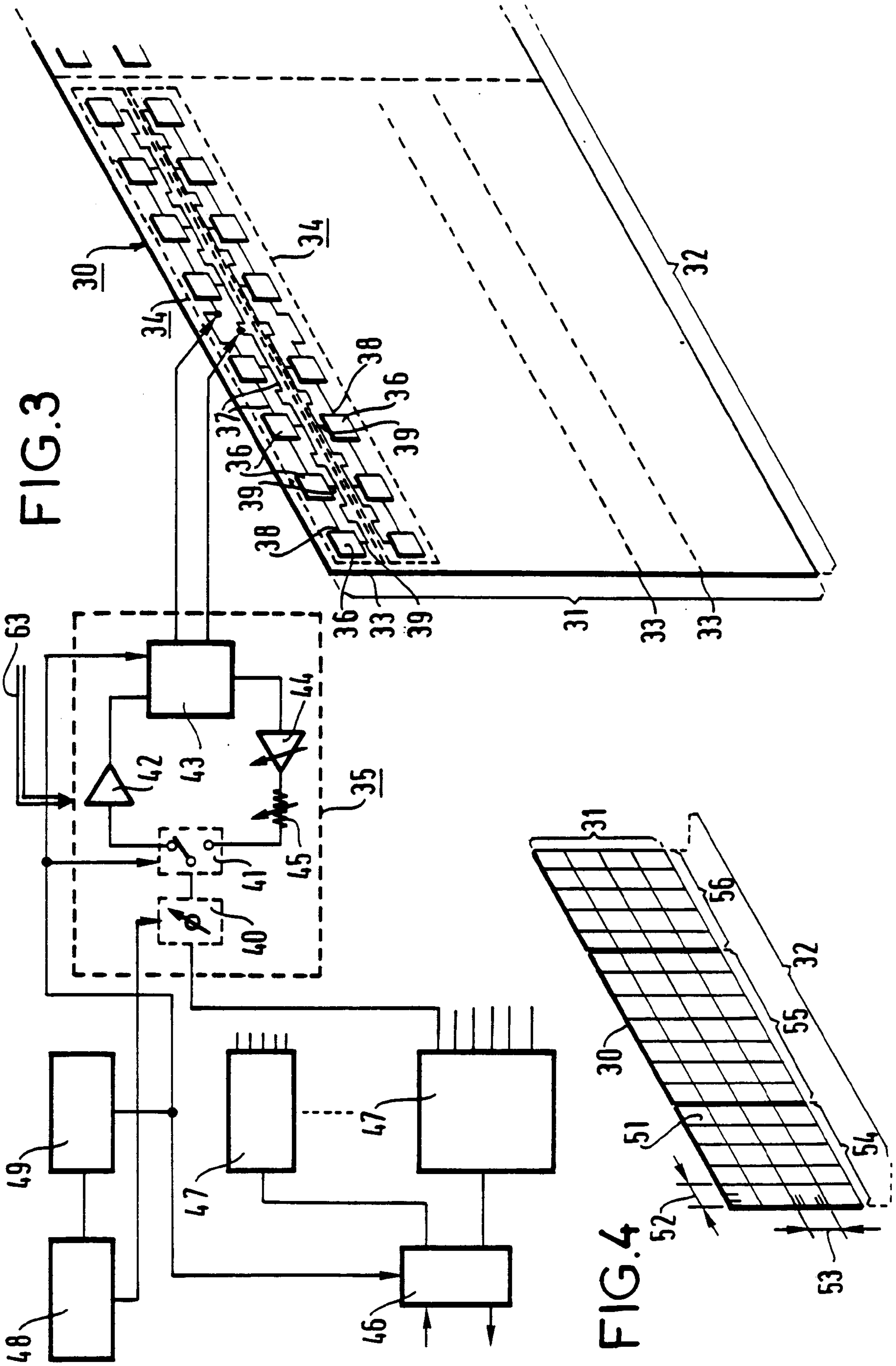
FIG.3
30
31
32
33
34
35
36
37
38
39
40
41
42
43
44
45
46
47
48
49
63
FIG.4
51
52
53
54
55
56

FIG.5

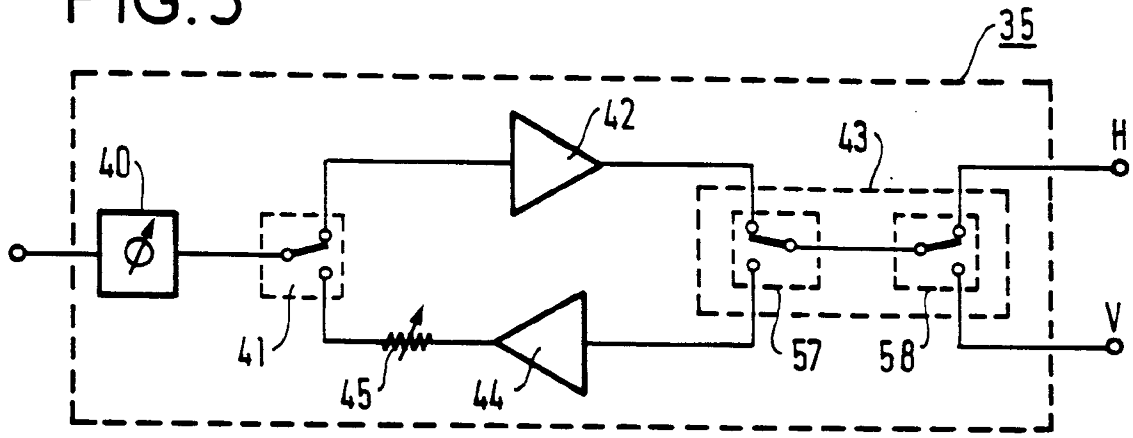


FIG.6

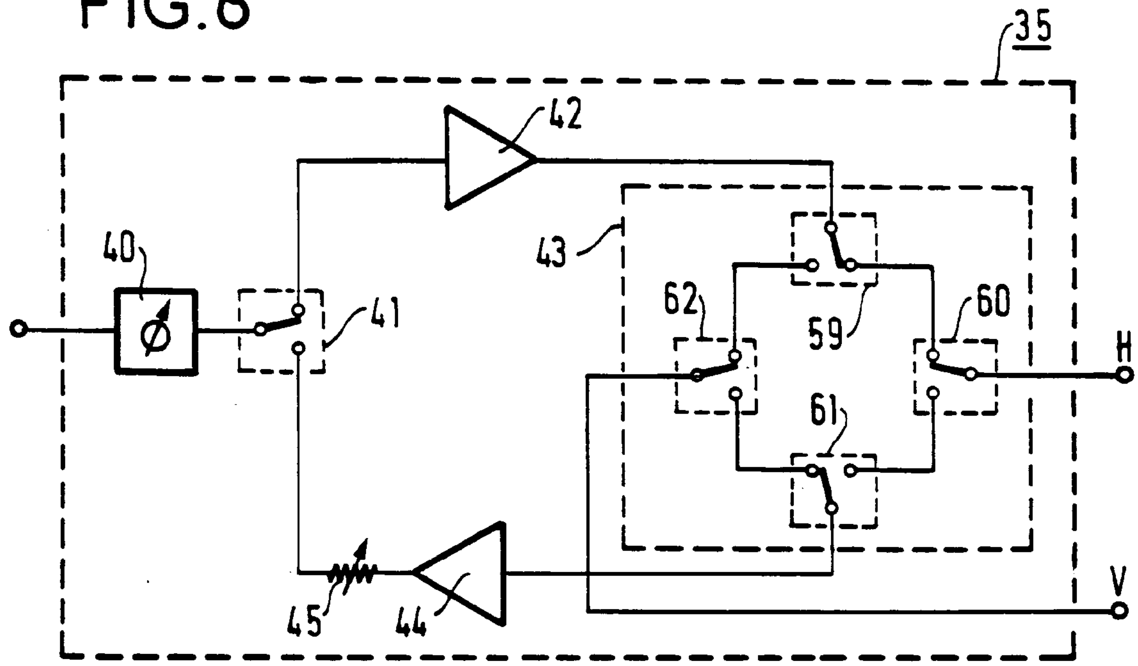


FIG.7

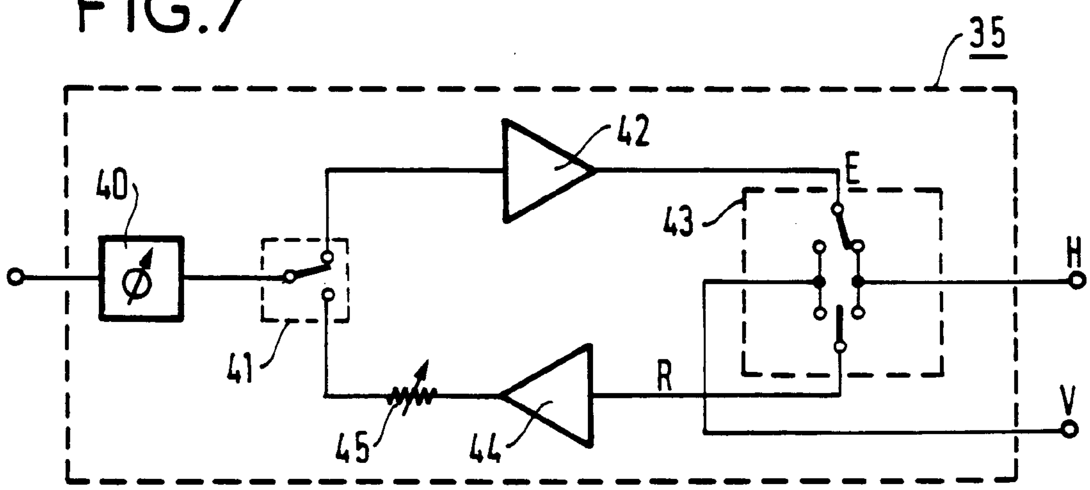

FIG.8

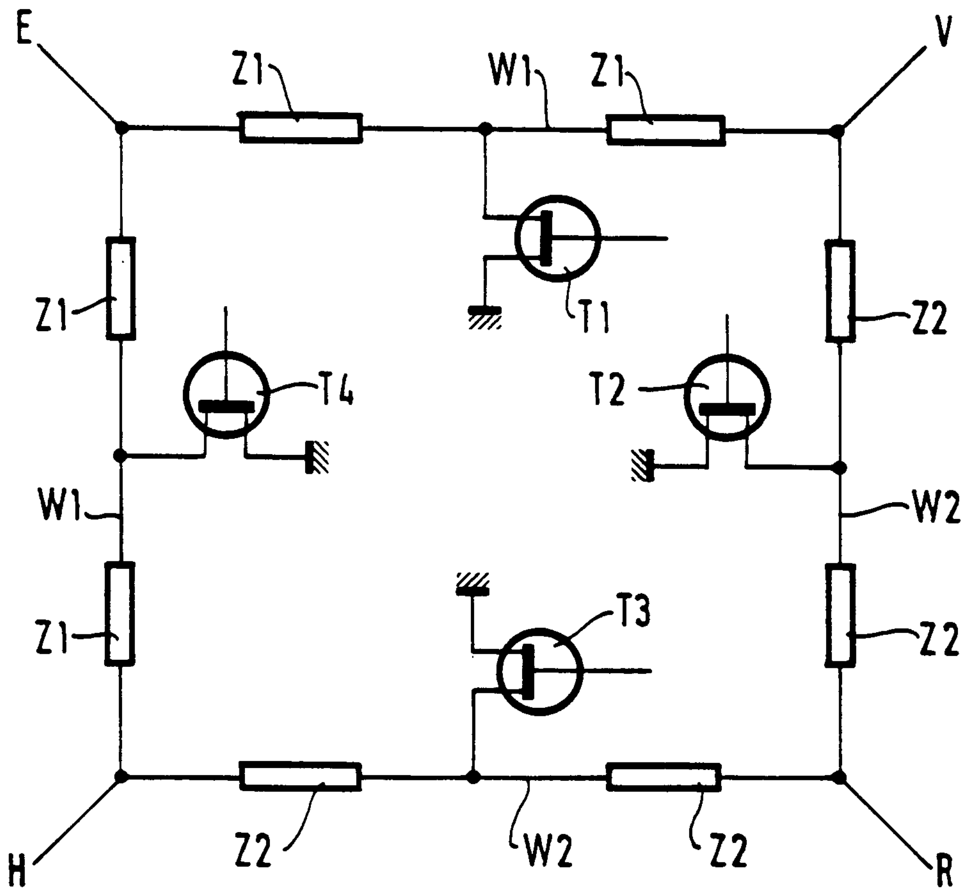

FIG.9

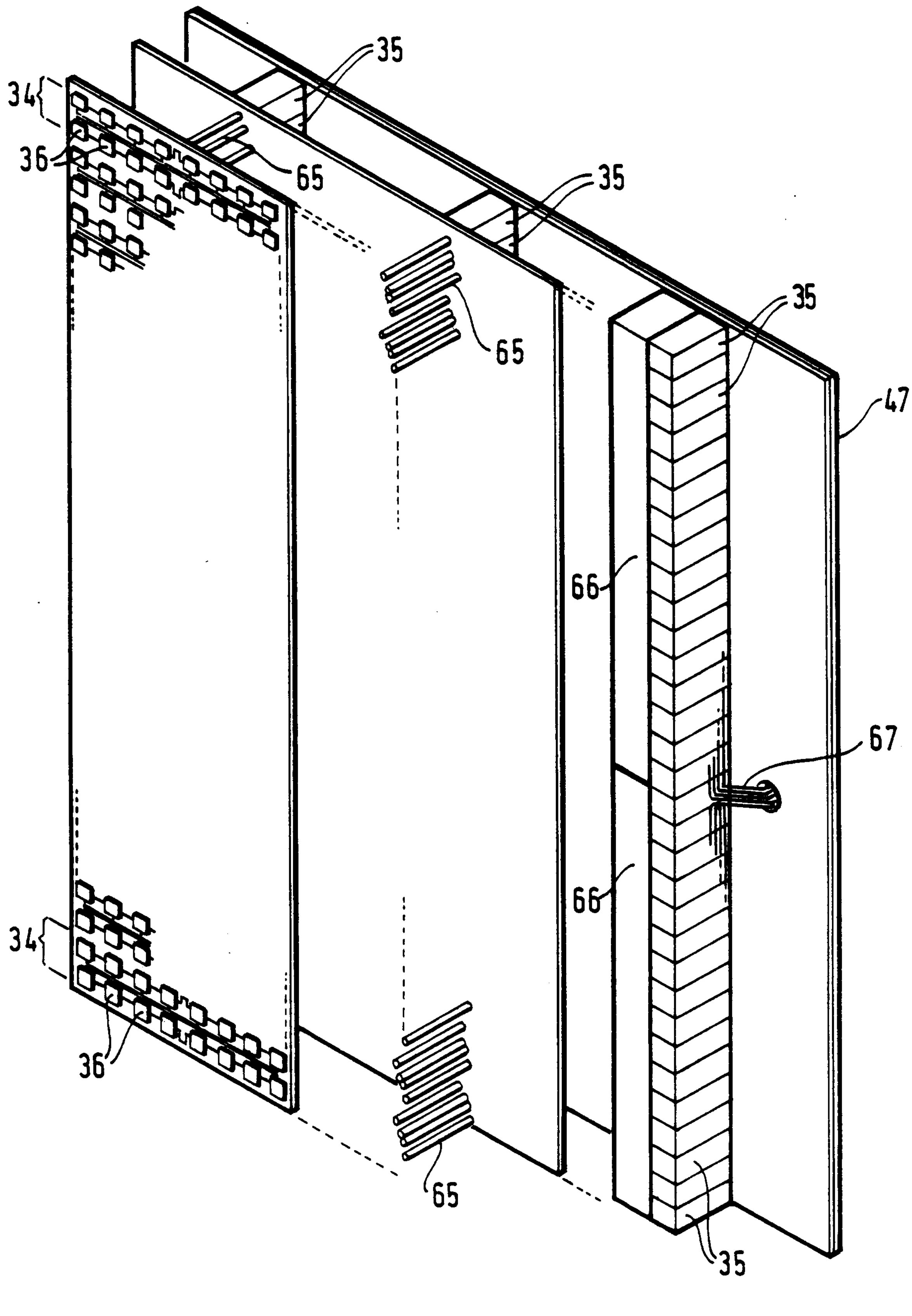

FIG.10

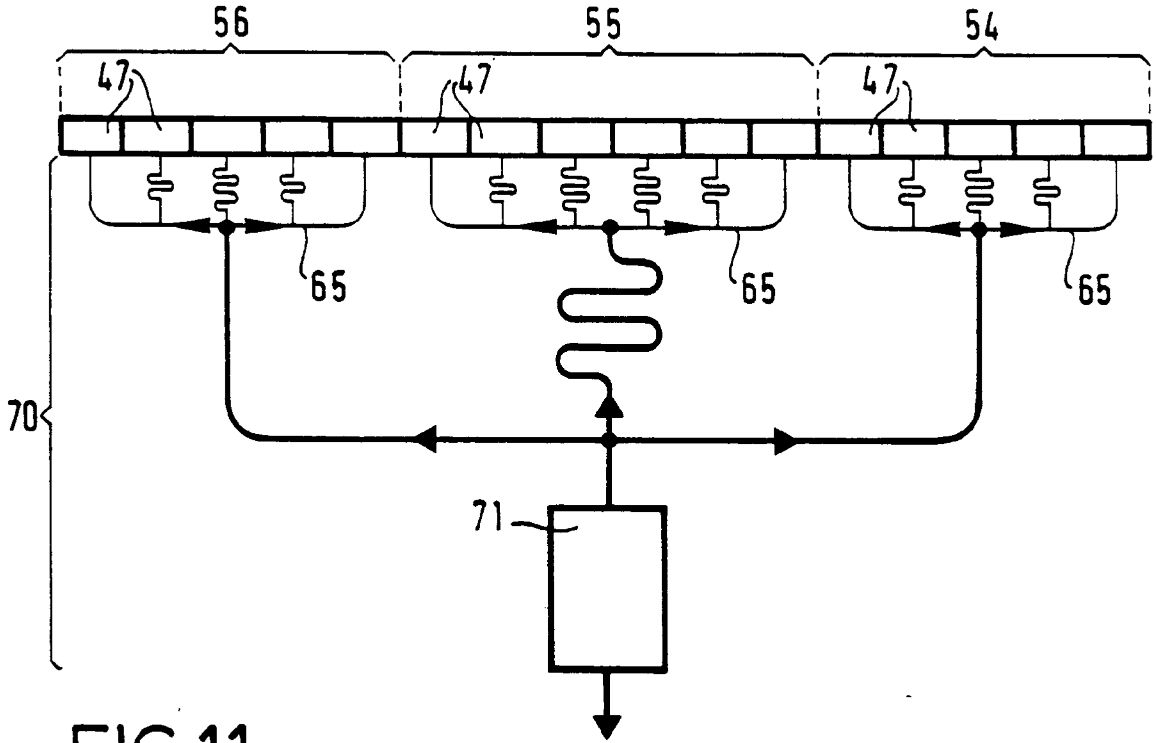


FIG.11

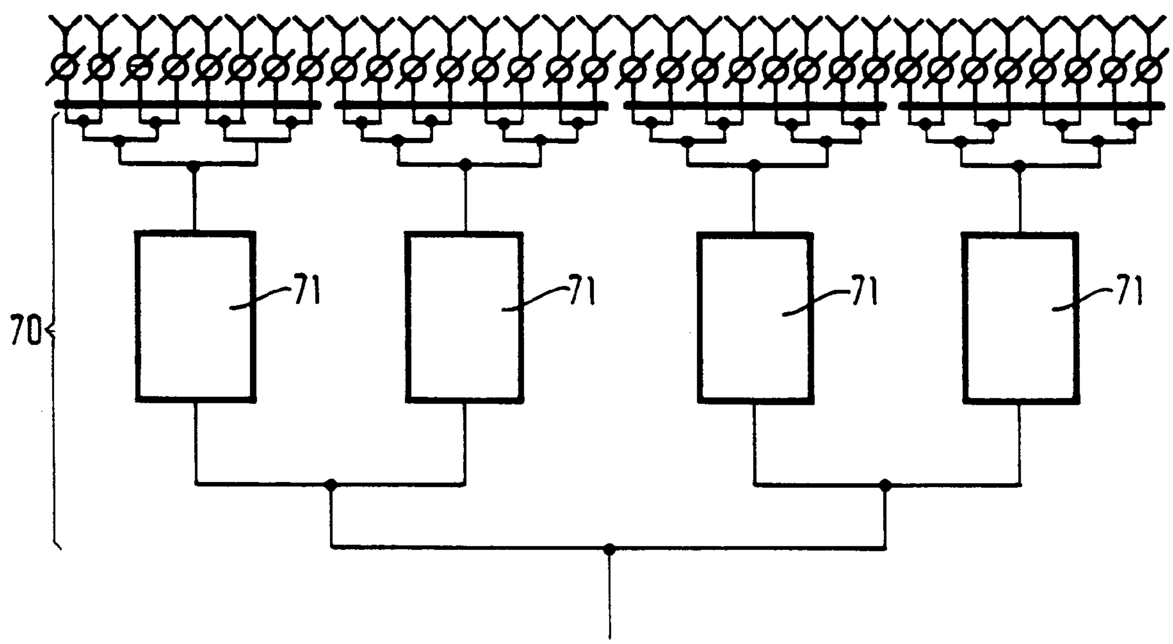

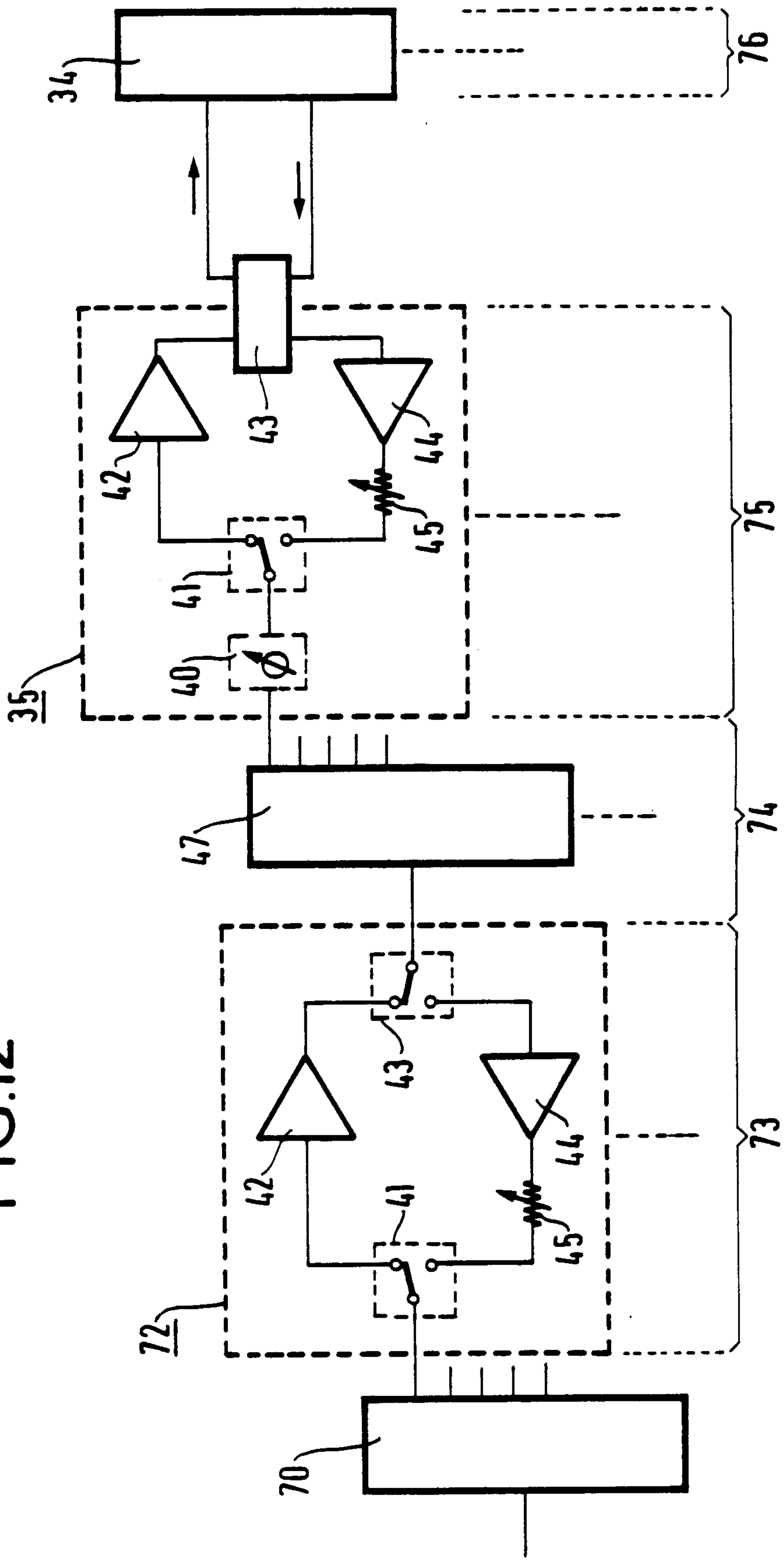


FIG.12

FIG.13

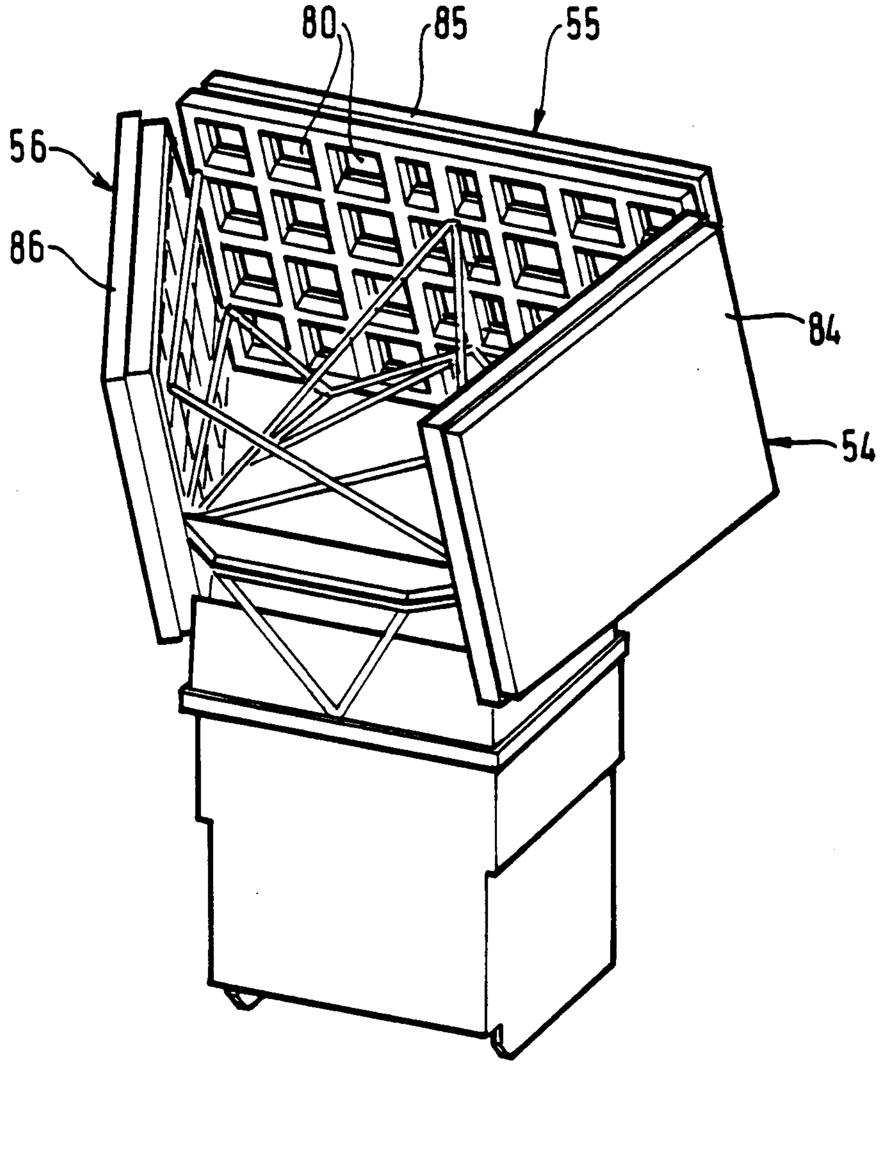

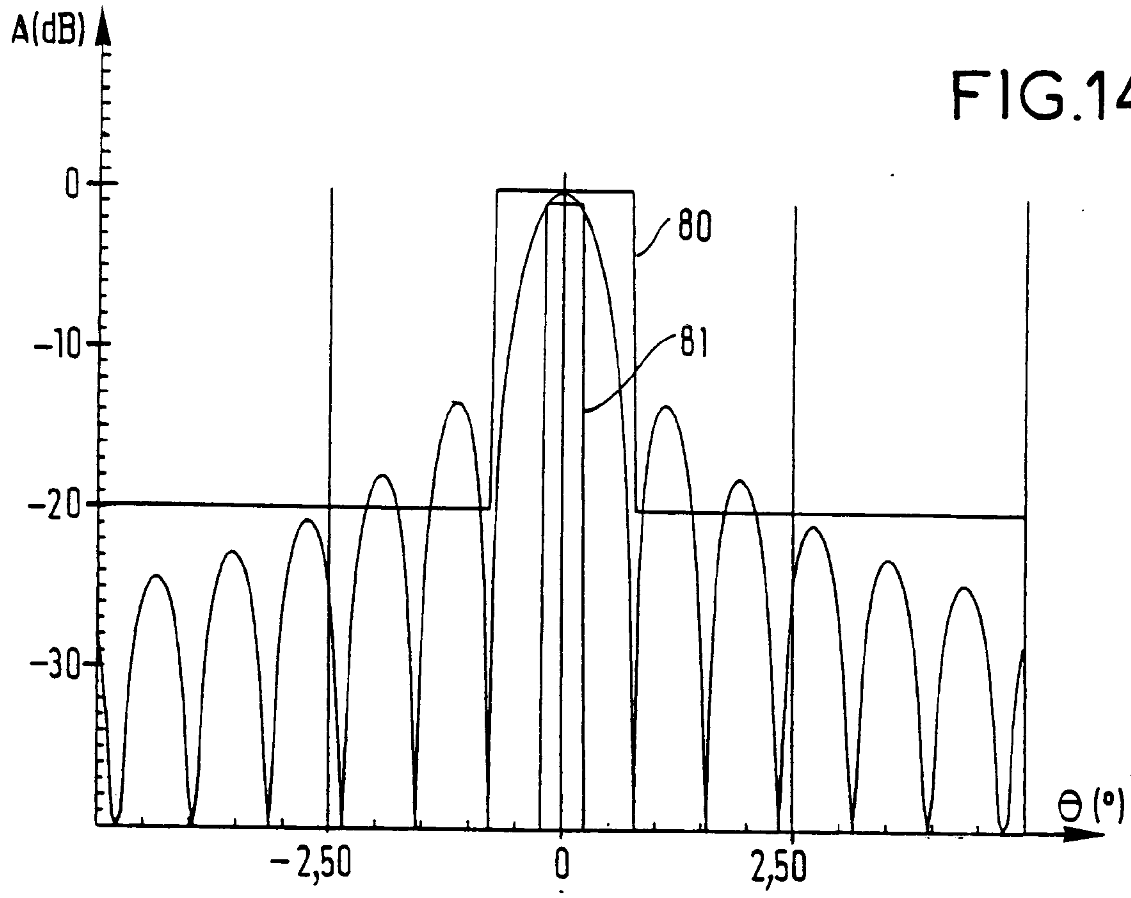


FIG.14A

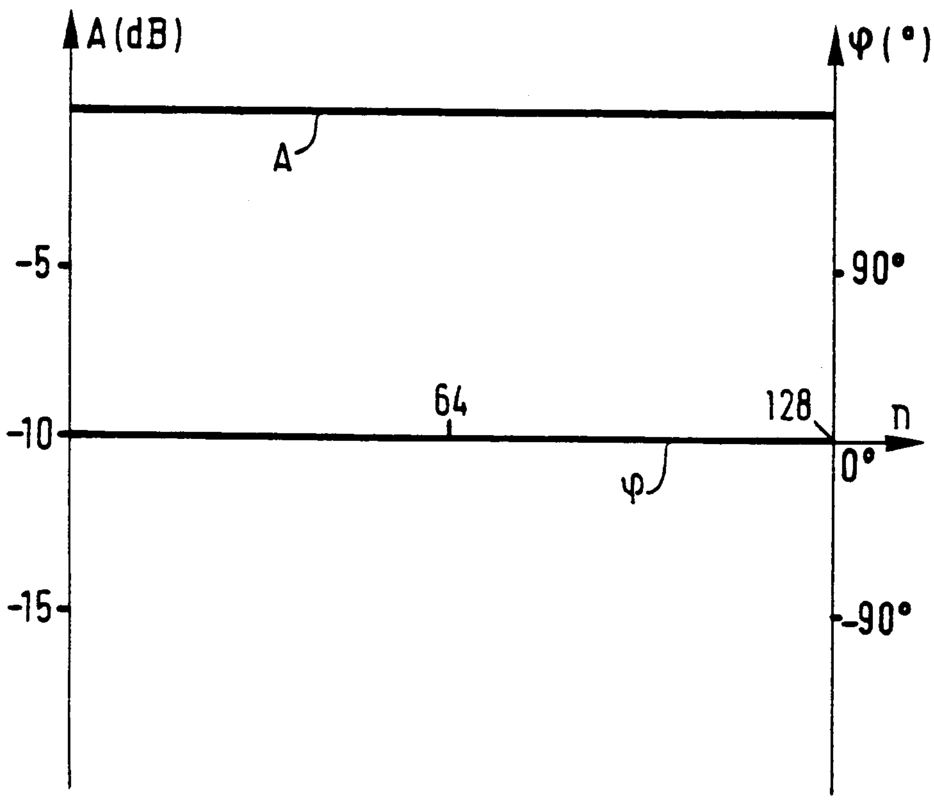


FIG.14B

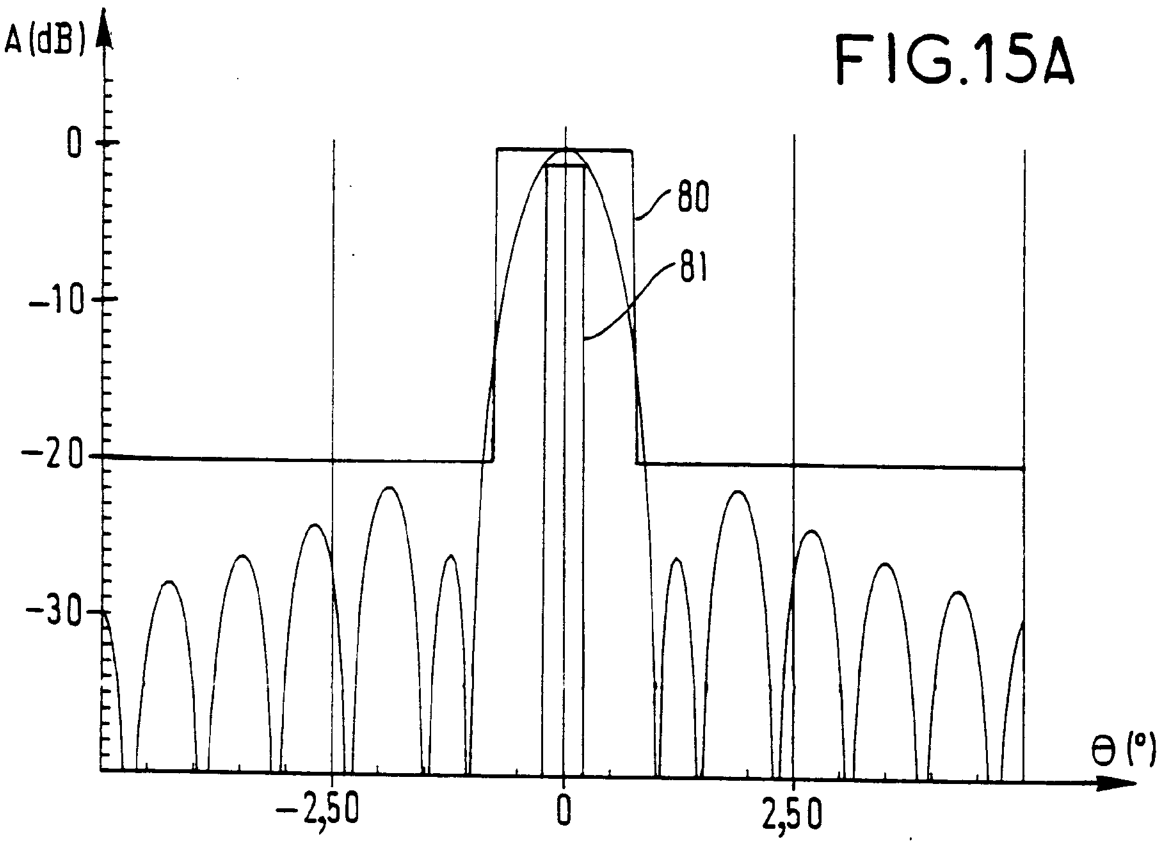


FIG.15A

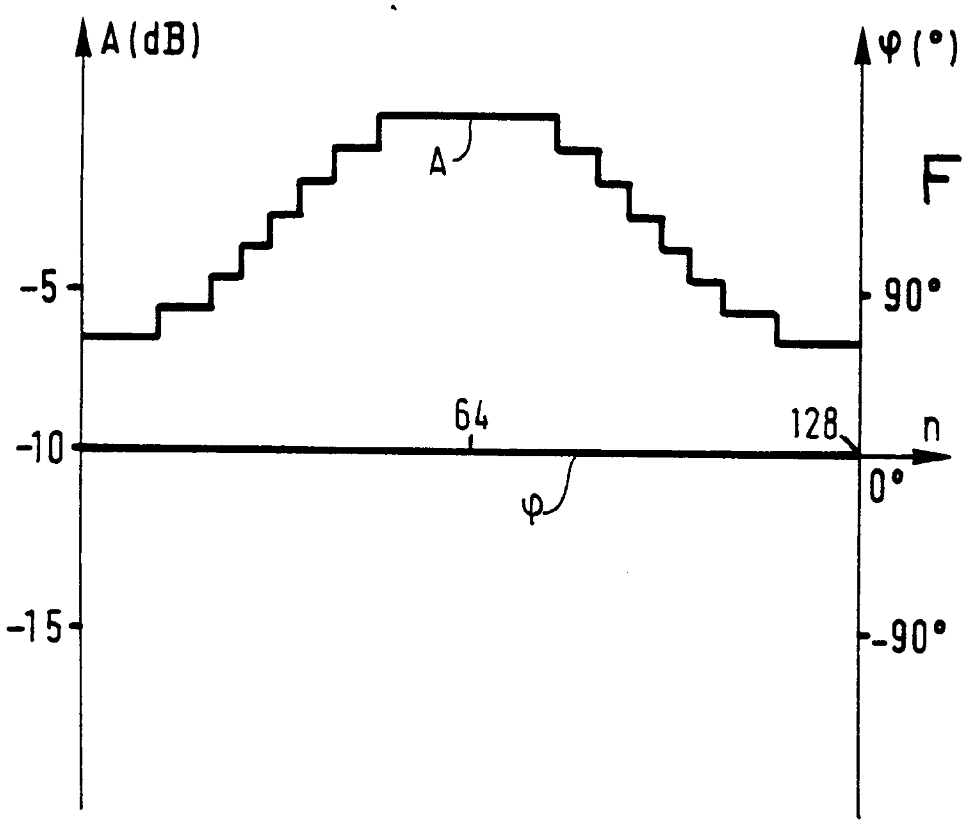


FIG.15B

FIG.16

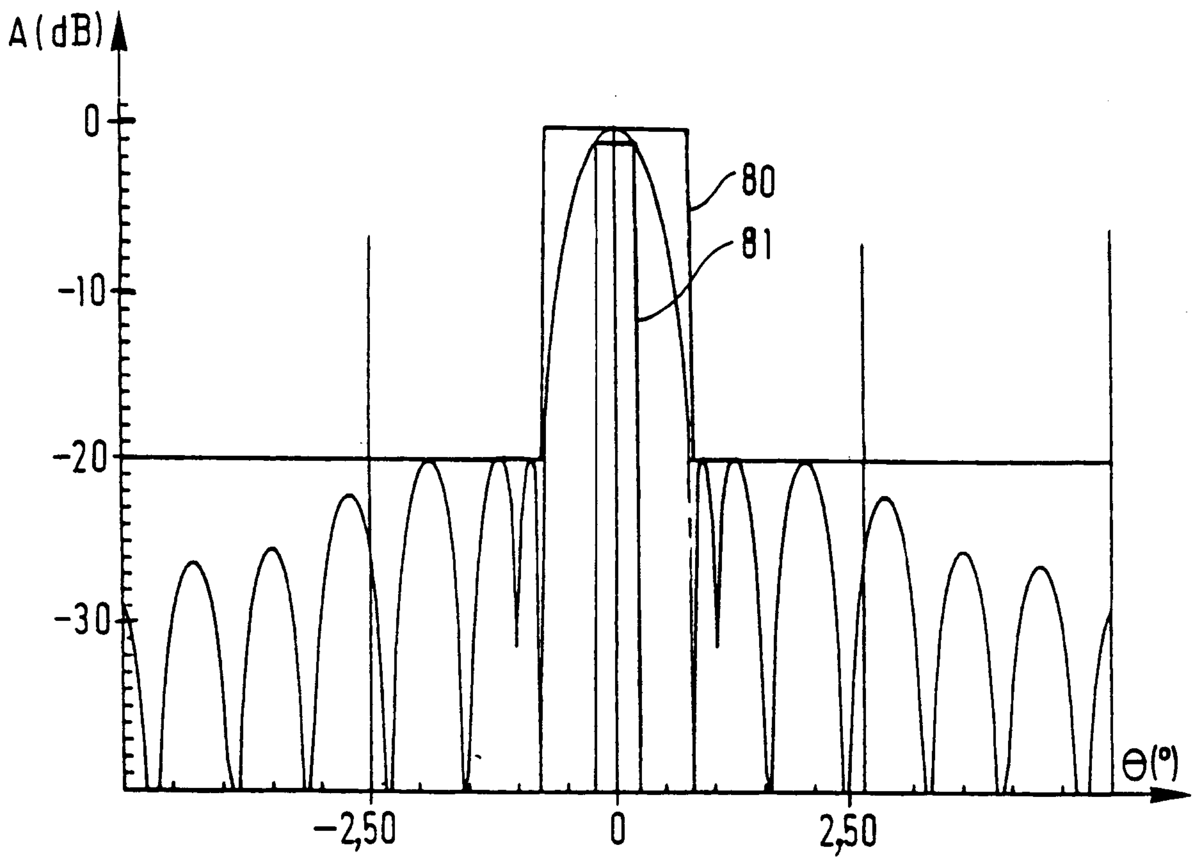

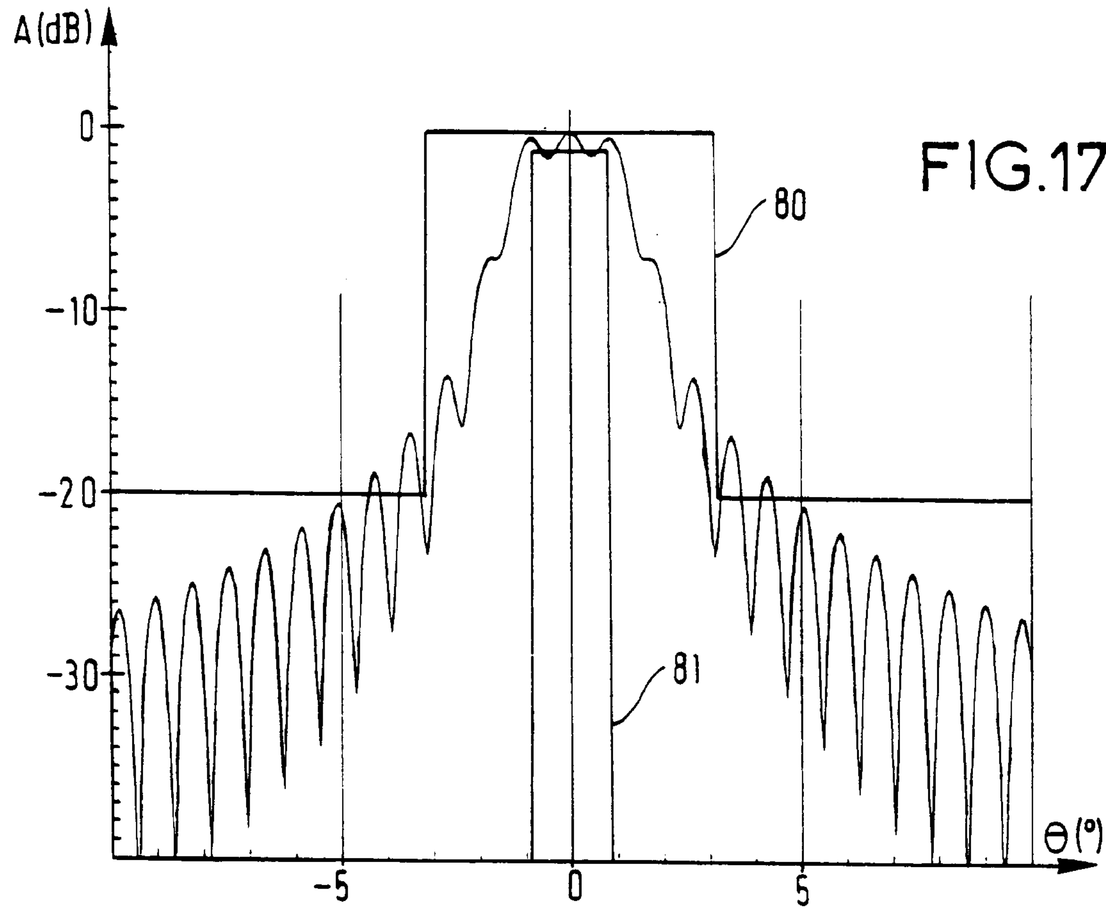


FIG.17A

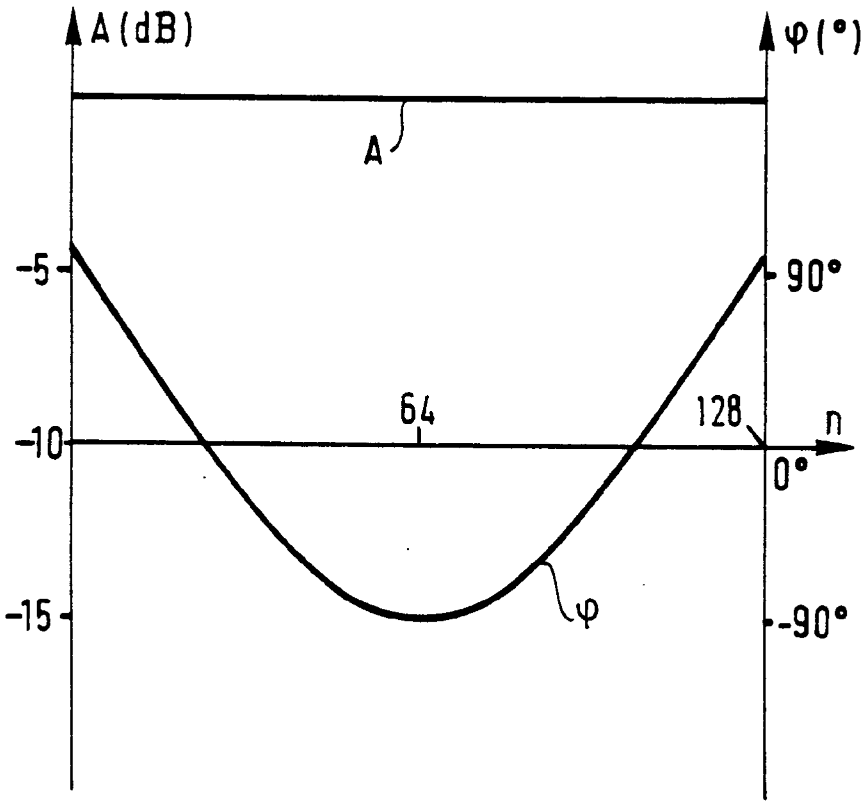


FIG.17B

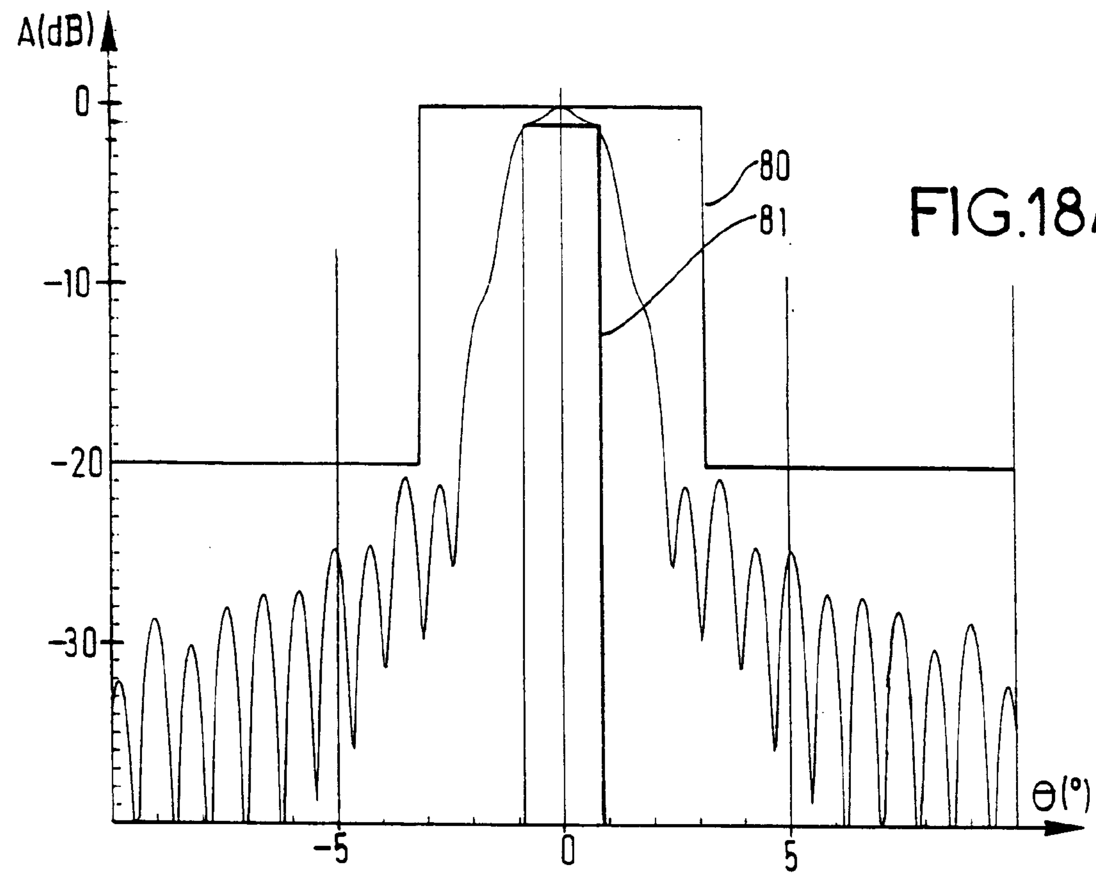


FIG.18A

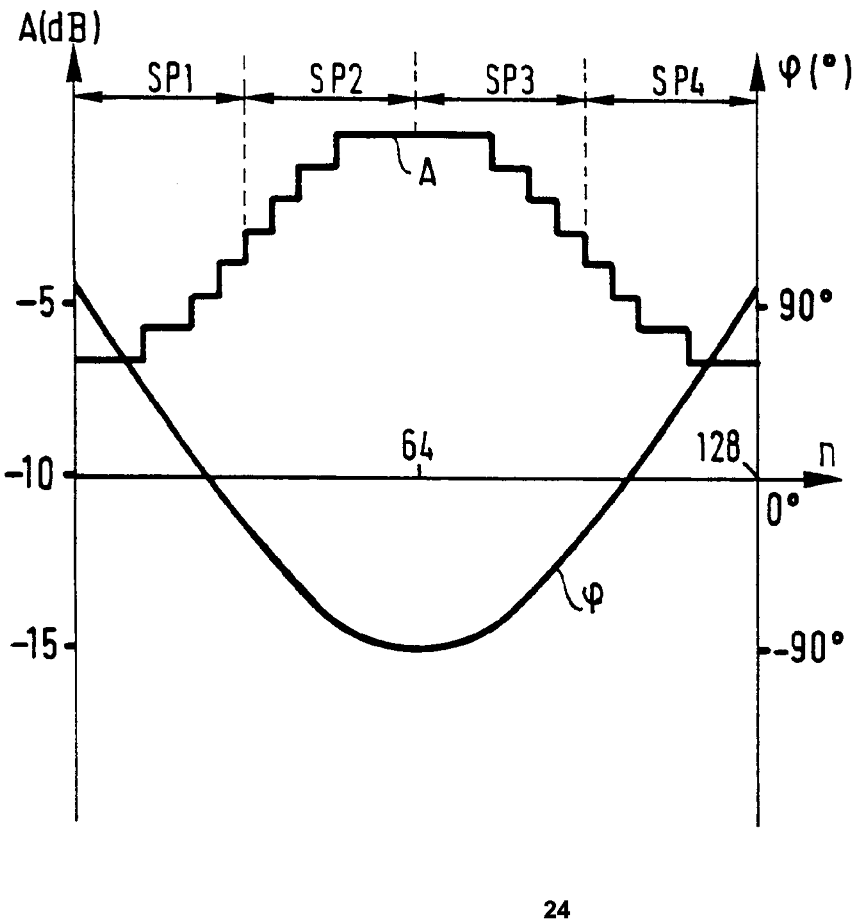


FIG.18B

FIG.19

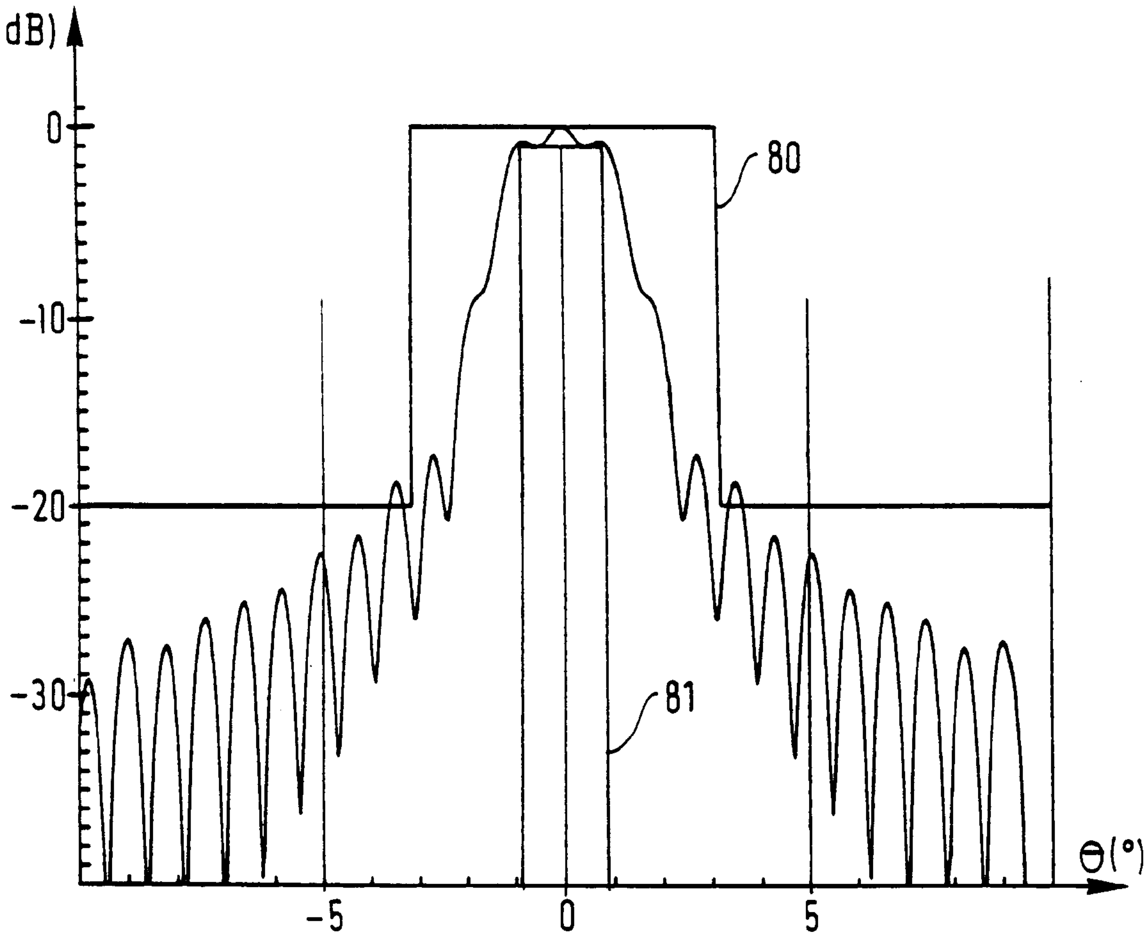

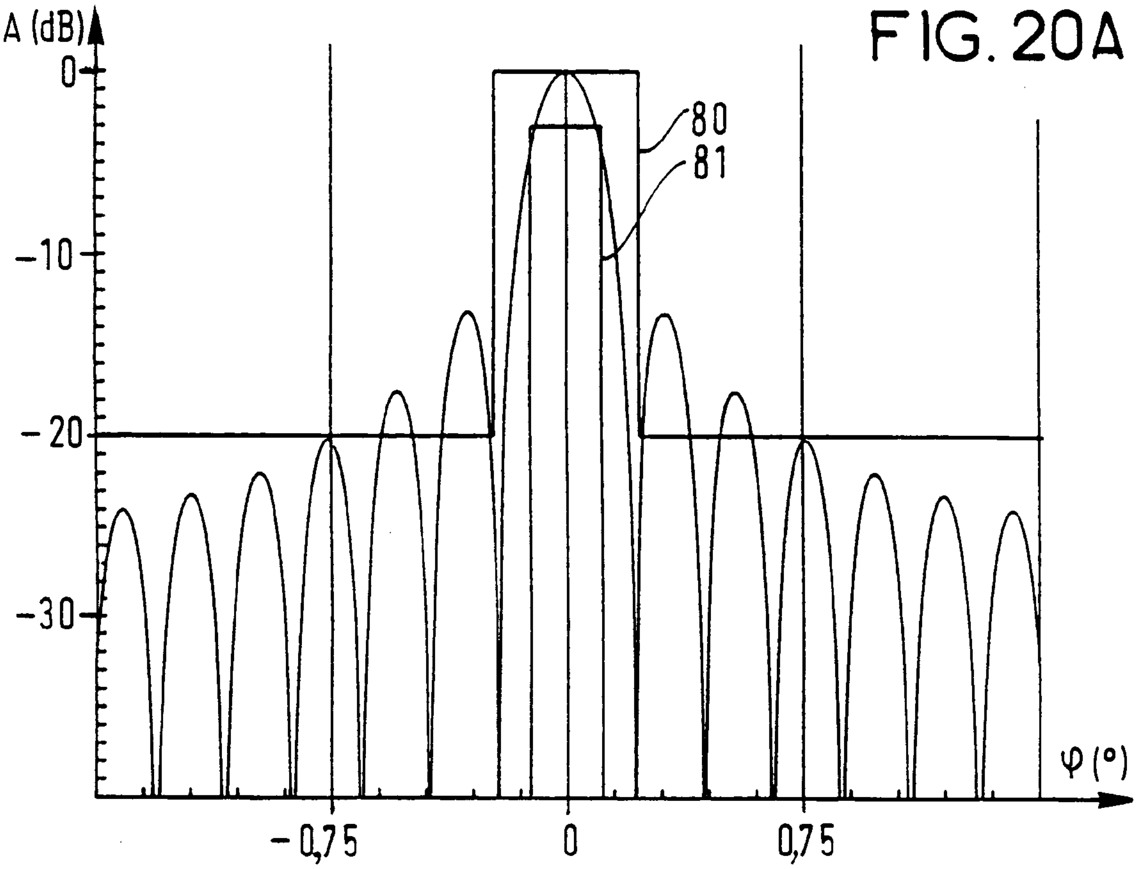


FIG. 20A

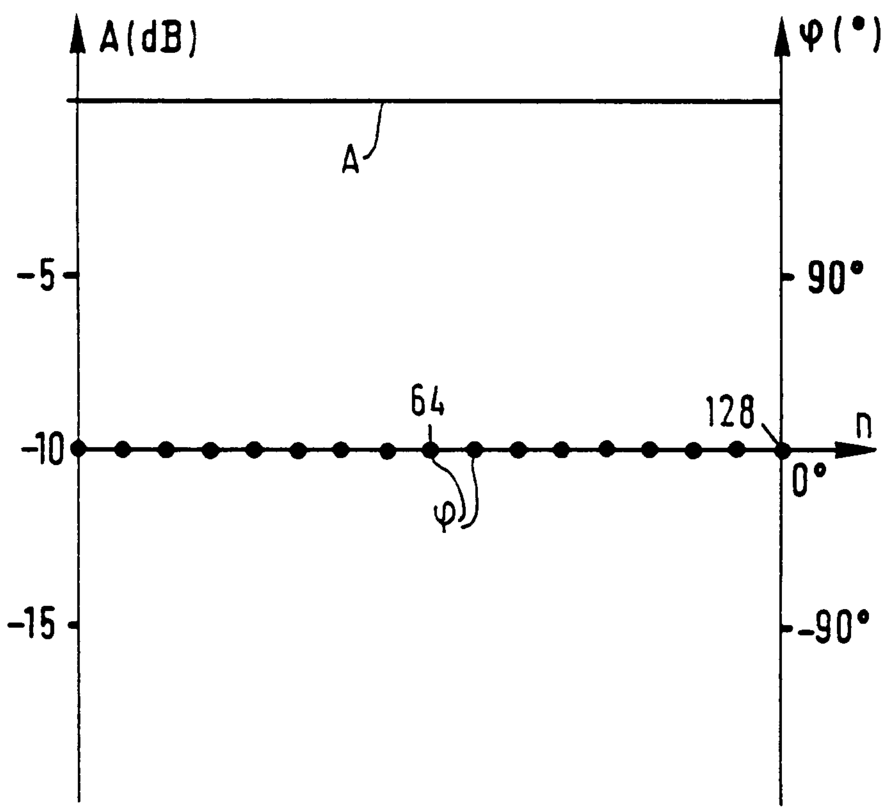


FIG.20B

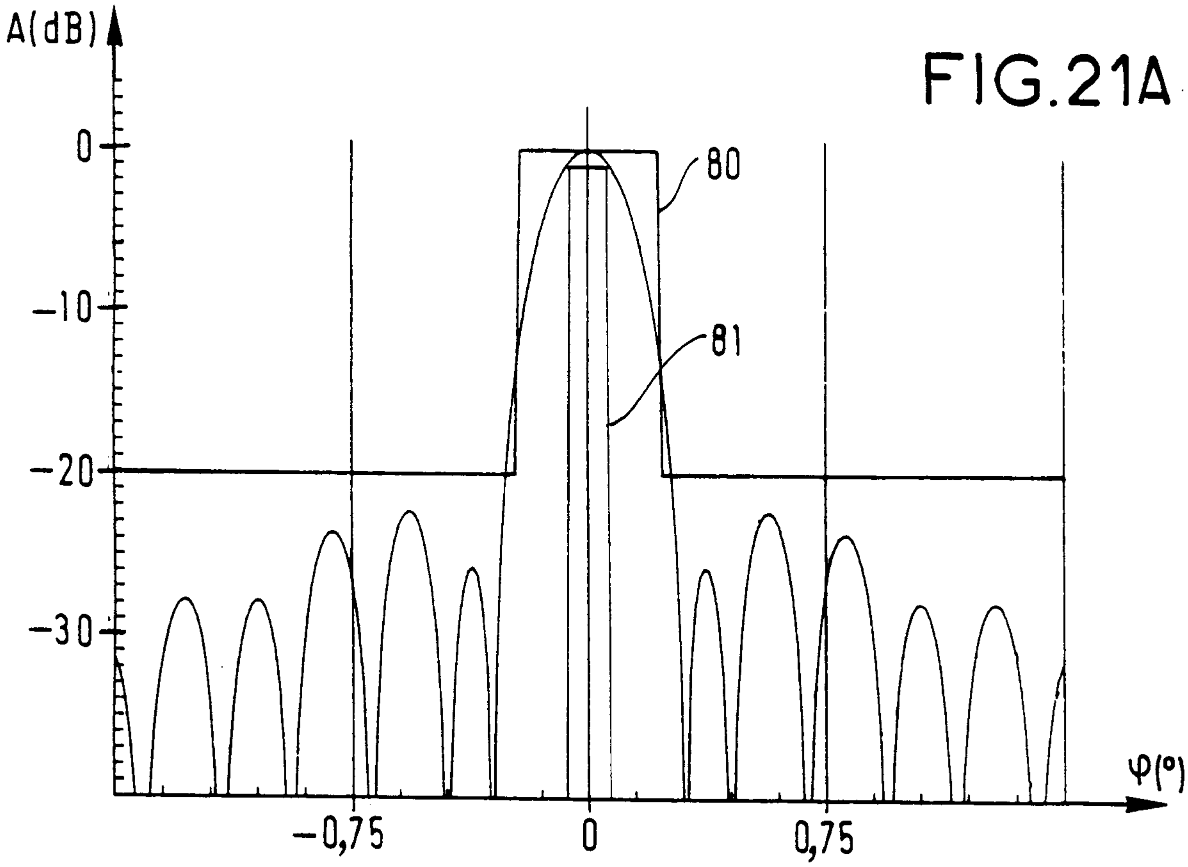


FIG.21A

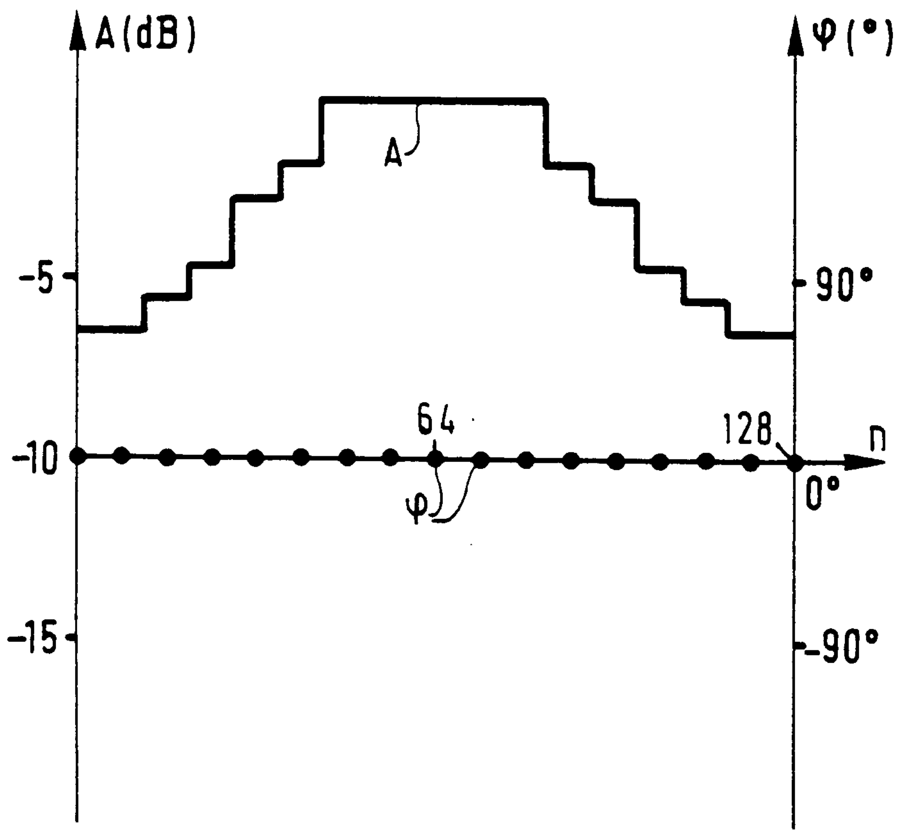


FIG.21B

FIG.22

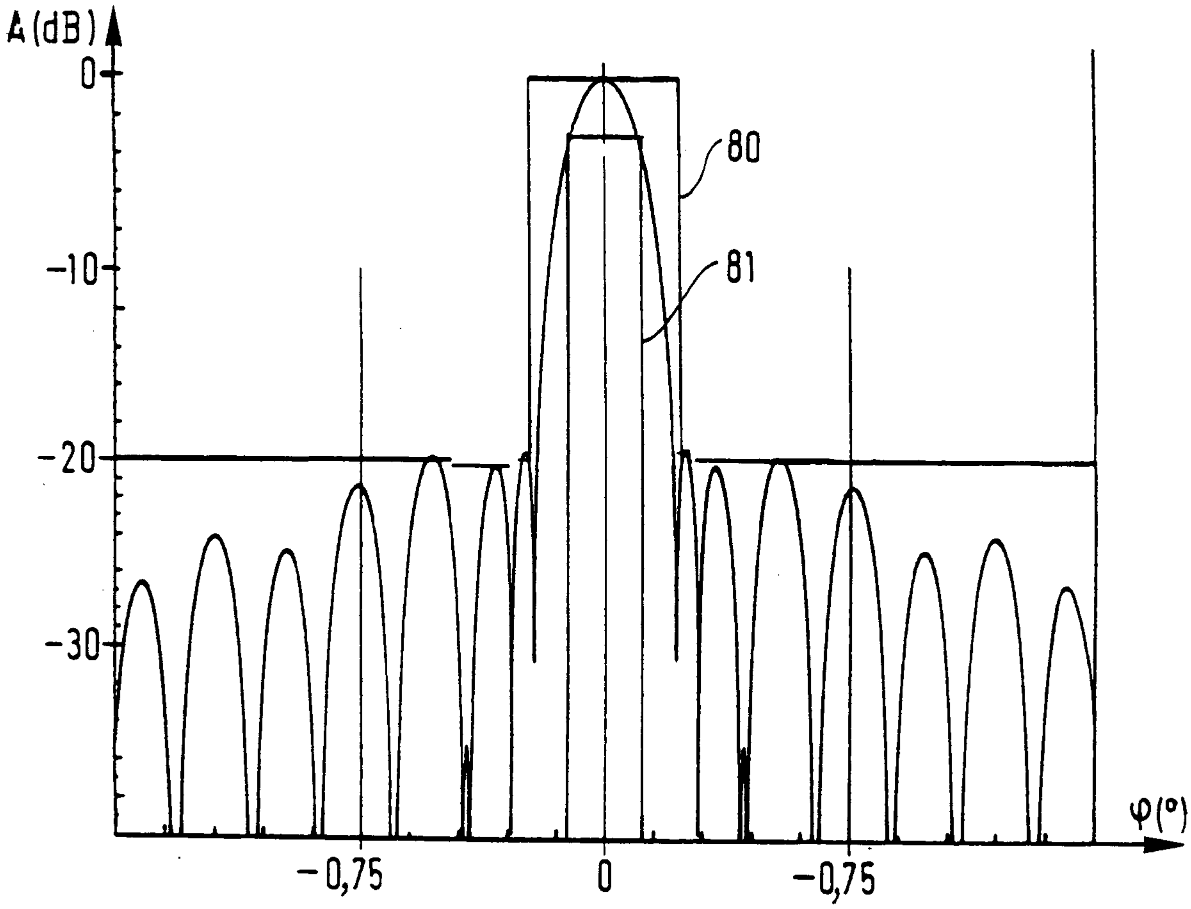

FIG. 23